# EUROPEAN PATENT SPECIFICATION

(11) **EP 3 865 205 B1**
(45) Date of publication and mention of the grant of the patent: **28.06.2023**
(21) Application number: 21156355.6
(22) Date of filing: 10.02.2021
(51) Int. Cl.: B01F 23/233, B01F 23/2373, B01F 23/70, B01F 33/3033, C02F 1/68

(54) **ULTRAFINE BUBBLE GENERATING APPARATUS AND ULTRAFINE BUBBLE GENERATING METHOD**
VORRICHTUNG UND VERFAHREN ZUR ERZEUGUNG VON ULTRAFEINEN BLASEN
APPAREIL ET PROCÉDÉ DE GÉNÉRATION DE BULLES ULTRAFINES

(30) Priority: 12.02.2020 JP 2020021482; 03.02.2021 JP 2021016054
(43) Date of publication of application: 18.08.2021
(73) Proprietor: CANON KABUSHIKI KAISHA, OHTA-KU Tokyo 146-8501 (JP)
(72) Inventor: KASHINO, Toshio, Tokyo, 146-8501 (JP); IMANAKA, Yoshiyuki, Tokyo, 146-8501 (JP); KUBOTA, Masahiko, Tokyo, 146-8501 (JP); YAMADA, Akitoshi, Tokyo, 146-8501 (JP); YAMAMOTO, Akira, Tokyo, 146-8501 (JP); YANAI, Yumi, Tokyo, 146-8501 (JP); OZAKI, Teruo, Tokyo, 146-8501 (JP); ISHINAGA, Hiroyuki, Tokyo, 146-8501 (JP)
(74) Representative: WESER & Kollegen Patentanwälte PartmbB

(56) References cited:
- WO-A1-2019/044631

## Description

### BACKGROUND OF THE INVENTION

### Field of the invention

The present invention relates to an ultrafine bubble generating apparatus and an ultrafine bubble generating method for generating ultrafine bubbles with a diameter of less than 1.0 µm.

### Description of the Related Art

In recent years, there have been developed techniques to which the characteristics of fine bubbles, such as microbubbles with a micrometer-size diameter and nanobubbles with a nanometer-size diameter, are applied. In particular, ultrafine bubbles (UFBs) with a diameter of less than 1.0 µm have been found useful in various fields.

Japanese Patent Laid-Open No. 2019-42732 discloses a method and apparatus for generating UFBs with nearly uniform size by utilizing the film boiling phenomenon.

However, conventional configurations need a structure such as a pump in order for a liquid to flow from a container that supplies the liquid to a UFB generating unit, to the UFB generating unit, and to a container that collects the liquid in which UFBs generated, and this makes it difficult to achieve compactness, power saving, and low cost.

WO 2019/044631 A1 discloses an ultrafine bubble generating apparatus comprising a liquid ejecting unit with a thermal energy generating element that generates ultrafine bubbles by film boiling.

### SUMMARY OF THE INVENTION

The present invention has been made to overcome the above problem, and has an object to provide a UFB generating apparatus that can achieve compactness, power saving, and low cost.

The present invention in its first aspect provides an ultrafine bubble generating apparatus as specified in claims 1 to 17.

The present invention in its second aspect provides an ultrafine bubble generating method as specified in claim 18.

Further features of the present invention will become apparent from the following description of exemplary embodiments with reference to the attached drawings.

### BRIEF DESCRIPTION OF THE DRAWINGS

FIG. 1 is a diagram showing an example of a UFB generating apparatus;
FIG. 2 is a diagram showing a schematic configuration of a pretreatment unit;
FIG. 3Ais a diagram showing a schematic configuration of a dissolving unit, and FIG. 3B is a diagram illustrating how a gas is dissolved in a liquid;
FIG. 4 is a diagram showing a schematic configuration of a T-UFB generating unit;
FIGs. 5A and 5B are diagrams illustrating a heater element in detail;
FIGs. 6A and 6B are diagrams illustrating how film boiling is caused by the heater elements;
FIGs. 7A to 7D are diagrams showing how UFBs are generated by expansion of a film boiling bubble;
FIGs. 8A to 8C are diagrams showing how UFBs are generated by contraction of a film boiling bubble;
FIGs. 9A to 9C are diagrams showing how UFBs are generated by re-heating of liquid;
FIGs. 10A and 10B are diagrams showing how UFBs are generated by shock wave caused by the collapse of a bubble generated by film boiling;
FIGs. 11A and 11B are diagrams showing how UFBs are generated by a change in saturation solubility;
FIGs. 12A to 12C are diagrams showing example configurations of a posttreatment unit;
FIGs. 13A and 13B are diagrams of the outer appearance of a UFB generating apparatus and a UFB generating head;
FIGs. 14A and 14B are diagrams showing the configuration of a UFB generating head;
FIGs. 15A and 15B are a front view and a sectional view, respectively, of a drive part of the UFB generating head;
FIGs. 16A to 16C show cases where a flow channel is oriented in various directions;
FIGs. 17A to 17C are schematic diagrams showing states where UFBs are generated in liquid flow channels in various orientations;
FIGs. 18A to 18C are diagrams showing a modification of the liquid flow channel;
FIG. 19 is a diagram showing a method of promoting a flow of liquid by controlling the order in which the heater elements are driven;
FIGs. 20A and 20B show examples of a cartridge usable in the UFB generating apparatus;
FIGs. 21A and 21B are diagrams showing how the cartridge is connected;
FIGs. 22A to 22C are diagrams showing another example of how the cartridge is connected;
FIG. 23 is a flowchart illustrating a procedure to manufacture a UFB-contained liquid;
FIGs. 24A to 24C are diagrams illustrating a modification of a configuration part of the UFB generating head; and
FIGs. 25Ato 25C are diagrams showing the correspondences between a cartridge, a flow channel, and a collecting container.

### DESCRIPTION OF THE EMBODIMENTS

### «Outline of a UFB generating apparatus»

An outline of a UFB generating apparatus that utilizes the film boiling phenomenon is described below.

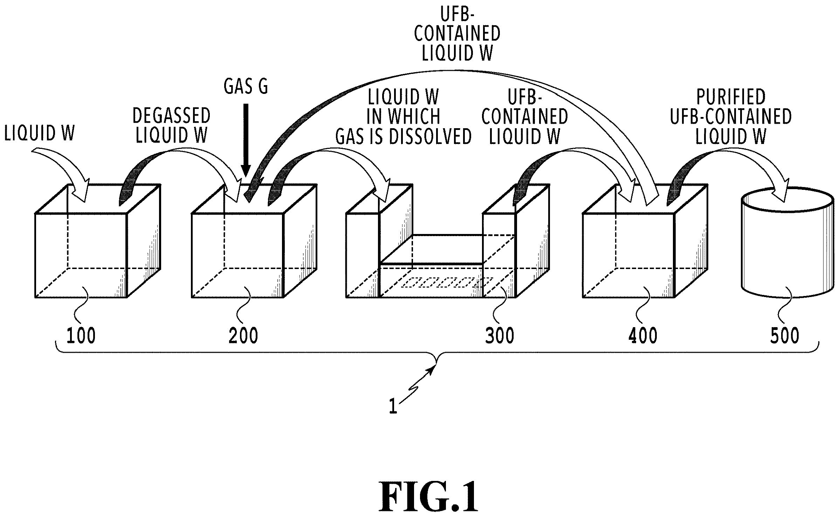

Fig. 1 is a diagram illustrating an example of a UFB generating apparatus applicable to the present invention. A UFB generating apparatus 1 includes a pre-processing unit 100, dissolving unit 200, a T-UFB generating unit 300, a post-processing unit 400, and a collecting unit 500. Each unit performs unique processing on a liquid W such as tap water supplied to the pre-processing unit 100 in the above order, and the thus-processed liquid W is collected as a T-UFB-containing liquid by the collecting unit 500. Functions and configurations of the units are described below. Although details are described later, UFBs generated by utilizing the film boiling caused by rapid heating are referred to as thermal-ultrafine bubbles (T-UFBs) in this specification.

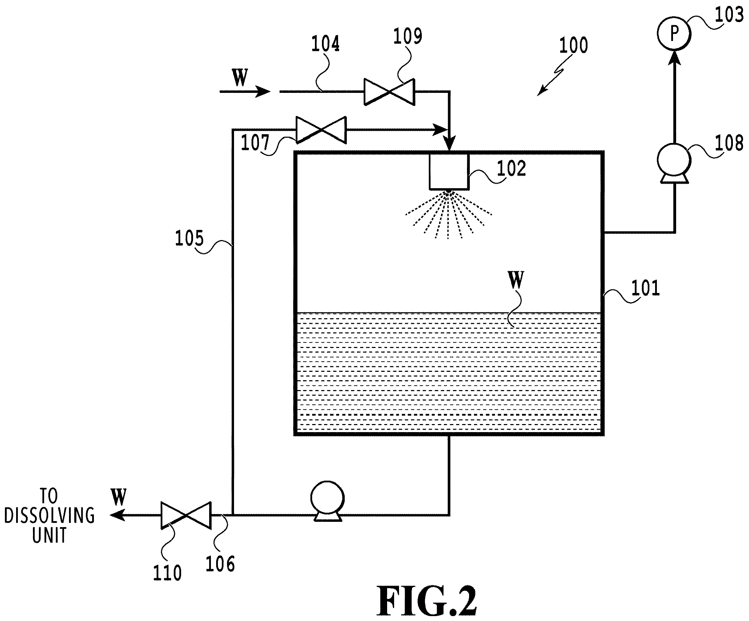

Fig. 2 is a schematic configuration diagram of the pre-processing unit 100. The pre-processing unit 100 performs a degassing treatment on the supplied liquid W. The pre-processing unit 100 mainly includes a degassing container 101, a shower head 102, a depressurizing pump 103, a liquid introduction passage 104, a liquid circulation passage 105, and a liquid discharge passage 106. For example, the liquid W such as tap water is supplied to the degassing container 101 from the liquid introduction passage 104 through a valve 109. In this process, the shower head 102 provided in the degassing container 101 sprays a mist of the liquid W in the degassing container 101. The shower head 102 is for prompting the gasification of the liquid W; however, a centrifugal and the like may be used instead as the mechanism for producing the gasification prompt effect.

When a certain amount of the liquid W is reserved in the degassing container 101 and then the depressurizing pump 103 is activated with all the valves closed, already-gasified gas components are discharged, and gasification and discharge of gas components dissolved in the liquid W are also prompted. In this process, the internal pressure of the degassing container 101 may be depressurized to around several hundreds to thousands of Pa (1.0 Torr to 10.0 Torr) while checking a manometer 108. The gases to be removed by the pre-processing unit 100 includes nitrogen, oxygen, argon, carbon dioxide, and so on, for example.

The above-described degassing processing can be repeatedly performed on the same liquid W by utilizing the liquid circulation passage 105. Specifically, the shower head 102 is operated with the valve 109 of the liquid introduction passage 104 and a valve 110 of the liquid discharge passage 106 closed and a valve 107 of the liquid circulation passage 105 opened. This allows the liquid W reserved in the degassing container 101 and degassed once to be resprayed in the degassing container 101 from the shower head 102. In addition, with the depressurizing pump 103 operated, the gasification processing by the shower head 102 and the degassing processing by the depressurizing pump 103 are repeatedly performed on the same liquid W. Every time the above processing utilizing the liquid circulation passage 105 is performed repeatedly, it is possible to decrease the gas components contained in the liquid W in stages. Once the liquid W degassed to a desired purity is obtained, the liquid W is transferred to the dissolving unit 200 through the liquid discharge passage 106 with the valve 110 opened.

Fig. 2 illustrates the degassing unit 100 that depressurizes the gas part to gasify the solute; however, the method of degassing the solution is not limited thereto. For example, a heating and boiling method for boiling the liquid W to gasify the solute may be employed, or a film degassing method for increasing the interface between the liquid and the gas using hollow fibers. A SEPAREL series (produced by DIC corporation) is commercially supplied as the degassing module using the hollow fibers. The SEPAREL series uses poly(4-methylpentene-1) (PMP) for the raw material of the hollow fibers and is used for removing air bubbles from ink and the like mainly supplied for a piezo head. In addition, two or more of an evacuating method, the heating and boiling method, and the film degassing method may be used together.

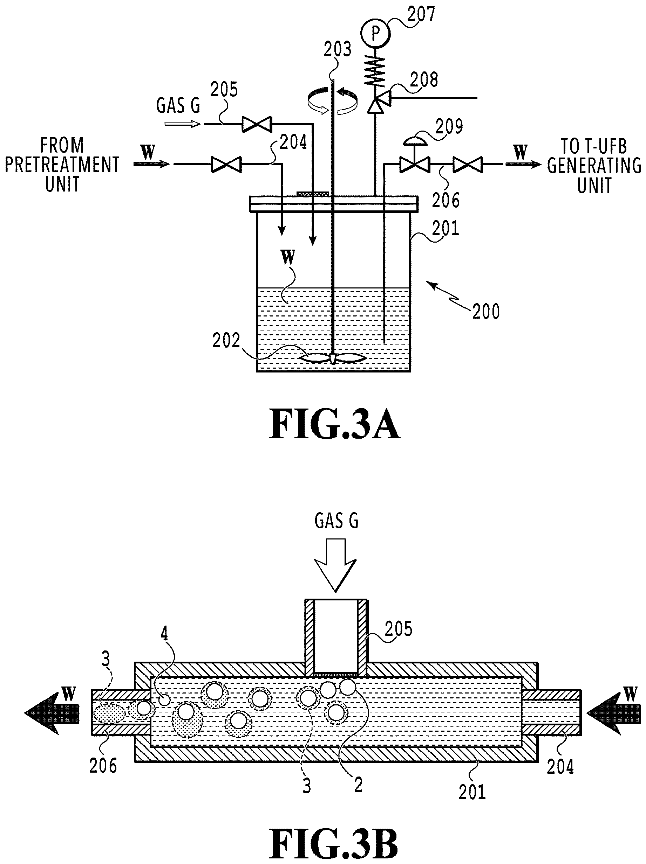

Figs. 3A and 3B are a schematic configuration diagram of the dissolving unit 200 and a diagram for describing the dissolving states in the liquid. The dissolving unit 200 is a unit for dissolving a desired gas into the liquid W supplied from the pre-processing unit 100. The dissolving unit 200 of this embodiment mainly includes a dissolving container 201, a rotation shaft 203 provided with a rotation plate 202, a liquid introduction passage 204, a gas introduction passage 205, a liquid discharge passage 206, and a pressurizing pump 207.

The liquid W supplied from the pre-processing unit 100 is supplied and reserved into the dissolving container 201 through the liquid introduction passage 204. Meanwhile, a gas G is supplied to the dissolving container 201 through the gas introduction passage 205.

Once predetermined amounts of the liquid W and the gas G are reserved in the dissolving container 201, the pressurizing pump 207 is activated to increase the internal pressure of the dissolving container 201 to about 0.5 MPa. A safety valve 208 is arranged between the pressurizing pump 207 and the dissolving container 201. With the rotation plate 202 in the liquid rotated via the rotation shaft 203, the gas G supplied to the dissolving container 201 is transformed into air bubbles, and the contact area between the gas G and the liquid W is increased to prompt the dissolution into the liquid W. This operation is continued until the solubility of the gas G reaches almost the maximum saturation solubility. In this case, a unit for decreasing the temperature of the liquid may be provided to dissolve the gas as much as possible. When the gas is with low solubility, it is also possible to increase the internal pressure of the dissolving container 201 to 0.5 MPa or higher. In this case, the material and the like of the container need to be the optimum for safety sake.

Once the liquid W in which the components of the gas G are dissolved at a desired concentration is obtained, the liquid W is discharged through the liquid discharge passage 206 and supplied to the T-UFB generating unit 300. In this process, a back-pressure valve 209 adjusts the flow pressure of the liquid W to prevent excessive increase of the pressure during the supplying.

Fig. 3B is a diagram schematically illustrating the dissolving states of the gas G put in the dissolving container 201. An air bubble 2 containing the components of the gas G put in the liquid W is dissolved from a portion in contact with the liquid W. The air bubble 2 thus shrinks gradually, and a gas-dissolved liquid 3 then appears around the air bubble 2. Since the air bubble 2 is affected by the buoyancy, the air bubble 2 may be moved to a position away from the center of the gas-dissolved liquid 3 or be separated out from the gas-dissolved liquid 3 to become a residual air bubble 4. Specifically, in the liquid W to be supplied to the T-UFB generating unit 300 through the liquid discharge passage 206, there is a mix of the air bubbles 2 surrounded by the gas-dissolved liquids 3 and the air bubbles 2 and the gas-dissolved liquids 3 separated from each other.

The gas-dissolved liquid 3 in the drawings means "a region of the liquid W in which the dissolution concentration of the gas G mixed therein is relatively high." In the gas components actually dissolved in the liquid W, the concentration of the gas components in the gas-dissolved liquid 3 is the highest at a portion surrounding the air bubble 2. In a case where the gas-dissolved liquid 3 is separated from the air bubble 2 the concentration of the gas components of the gas-dissolved liquid 3 is the highest at the center of the region, and the concentration is continuously decreased as away from the center. That is, although the region of the gas-dissolved liquid 3 is surrounded by a broken line in Fig. 3 for the sake of explanation, such a clear boundary does not actually exist. In addition, in the present invention, a gas that cannot be dissolved completely may be accepted to exist in the form of an air bubble in the liquid.

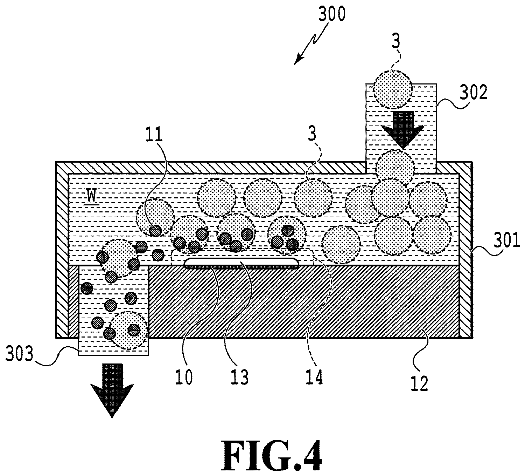

Fig. 4 is a schematic configuration diagram of the T-UFB generating unit 300. The T-UFB generating unit 300 mainly includes a chamber 301, a liquid introduction passage 302, and a liquid discharge passage 303. The flow from the liquid introduction passage 302 to the liquid discharge passage 303 through the chamber 301 is formed by a not-illustrated flow pump. Various pumps including a diaphragm pump, a gear pump, and a screw pump may be employed as the flow pump. In in the liquid W introduced from the liquid introduction passage 302, the gas-dissolved liquid 3 of the gas G put by the dissolving unit 200 is mixed.

An element substrate 12 provided with a heating element 10 is arranged on a bottom section of the chamber 301. With a predetermined voltage pulse applied to the heating element 10, a bubble 13 generated by the film boiling (hereinafter, also referred to as a film boiling bubble 13) is generated in a region in contact with the heating element 10. Then, an ultrafine bubble (UFB) 11 containing the gas G is generated caused by expansion and shrinkage of the film boiling bubble 13. As a result, a UFB-containing liquid W containing many UFBs 11 is discharged from the liquid discharge passage 303.

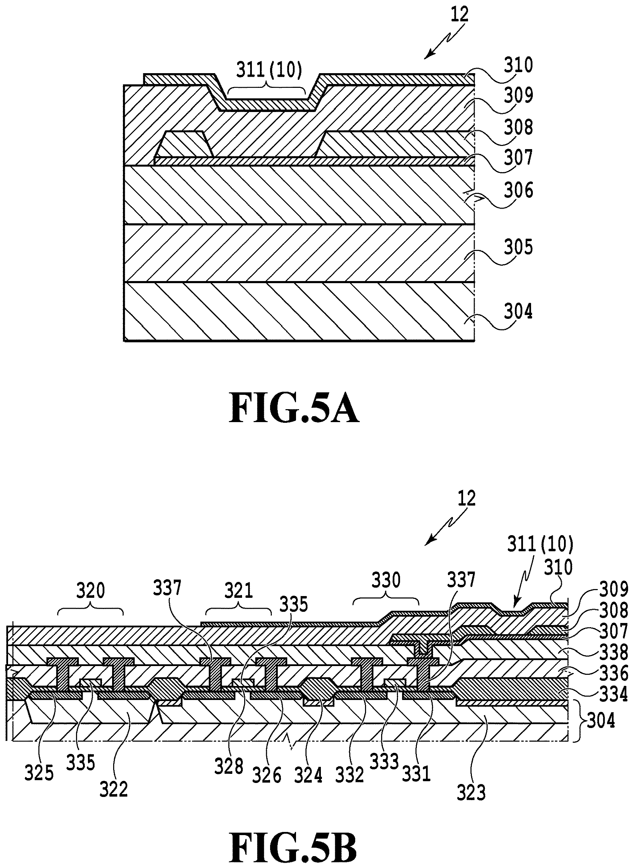

Figs. 5A and 5B are diagrams for illustrating a detailed configuration of the heating element 10. Fig. 5A illustrates a closeup view of the heating element 10, and Fig. 5B illustrates a cross-sectional view of a wider region of the element substrate 12 including the heating element 10.

As illustrated in Fig. 5A, in the element substrate 12, a thermal oxide film 305 as a heat-accumulating layer and an interlaminar film 306 also served as a heat-accumulating layer are laminated on a surface of a silicon substrate 304. A SiO₂ film or a SiN film may be used as the interlaminar film 306. A resistive layer 307 is formed on a surface of the interlaminar film 306, and a wiring 308 is partially formed on a surface of the resistive layer 307. An Al-alloy wiring of Al, Al-Si, Al-Cu, or the like may be used as the wiring 308. A protective layer 309 made of a SiO₂ film or a Si₃N₄ film is formed on surfaces of the wiring 308, the resistive layer 307, and the interlaminar film 306.

A cavitation-resistant film 310 for protecting the protective layer 309 from chemical and physical impacts due to the heat evolved by the resistive layer 307 is formed on a portion and around the portion on the surface of the protective layer 309, the portion corresponding to a heat-acting portion 311 that eventually becomes the heating element 10. A region on the surface of the resistive layer 307 in which the wiring 308 is not formed is the heat-acting portion 311 in which the resistive layer 307 evolves heat. The heating portion of the resistive layer 307 on which the wiring 308 is not formed functions as the heating element (heater) 10. As described above, the layers in the element substrate 12 are sequentially formed on the surface of the silicon substrate 304 by a semiconductor production technique, and the heat-acting portion 311 is thus provided on the silicon substrate 304.

The configuration illustrated in the drawings is an example, and various other configurations are applicable. For example, a configuration in which the laminating order of the resistive layer 307 and the wiring 308 is opposite, and a configuration in which an electrode is connected to a lower surface of the resistive layer 307 (so-called a plug electrode configuration) are applicable. In other words, as described later, any configuration may be applied as long as the configuration allows the heat-acting portion 311 to heat the liquid for generating the film boiling in the liquid.

Fig. 5B is an example of a cross-sectional view of a region including a circuit connected to the wiring 308 in the element substrate 12. AN-type well region 322 and a P-type well region 323 are partially provided in a top layer of the silicon substrate 304, which is a P-type conductor. AP-MOS 320 is formed in the N-type well region 322 and a N-MOS 321 is formed in the P-type well region 323 by introduction and diffusion of impurities by the ion implantation and the like in the general MOS process.

The P-MOS 320 includes a source region 325 and a drain region 326 formed by partial introduction of N-type or P-type impurities in a top layer of the N-type well region 322, a gate wiring 335, and so on. The gate wiring 335 is deposited on a part of a top surface of the N-type well region 322 excluding the source region 325 and the drain region 326, with a gate insulation film 328 of several hundreds of Å in thickness interposed between the gate wiring 335 and the top surface of the N-type well region 322.

The N-MOS 321 includes the source region 325 and the drain region 326 formed by partial introduction of N-type or P-type impurities in a top layer of the P-type well region 323, the gate wiring 335, and so on. The gate wiring 335 is deposited on a part of a top surface of the P-type well region 323 excluding the source region 325 and the drain region 326, with the gate insulation film 328 of several hundreds of Å in thickness interposed between the gate wiring 335 and the top surface of the P-type well region 323. The gate wiring 335 is made of polysilicon of 3000 Å to 5000 Å in thickness deposited by the CVD method. A C-MOS logic is constructed with the P-MOS 320 and the N-MOS 321.

In the P-type well region 323, a N-MOS transistor 330 for driving an electrothermal conversion element (heating resistance element) is formed on a portion different from the portion including the N-MOS 321. The N-MOS transistor 330 includes a source region 332 and a drain region 331 partially provided in the top layer of the P-type well region 323 by the steps of introduction and diffusion of impurities, a gate wiring 333, and so on. The gate wiring 333 is deposited on a part of the top surface of the P-type well region 323 excluding the source region 332 and the drain region 331, with the gate insulation film 328 interposed between the gate wiring 333 and the top surface of the P-type well region 323.

In this example, the N-MOS transistor 330 is used as the transistor for driving the electrothermal conversion element. However, the transistor for driving is not limited to the N-MOS transistor 330, and any transistor may be used as long as the transistor has a capability of driving multiple electrothermal conversion elements individually and can implement the above-described fine configuration. Although the electrothermal conversion element and the transistor for driving the electrothermal conversion element are formed on the same substrate in this example, those may be formed on different substrates separately.

An oxide film separation region 324 is formed by field oxidation of 5000 Å to 10000 Å in thickness between the elements, such as between the P-MOS 320 and the N-MOS 321 and between the N-MOS 321 and the N-MOS transistor 330. The oxide film separation region 324 separates the elements. A portion of the oxide film separation region 324 corresponding to the heat-acting portion 311 functions as a heat-accumulating layer 334, which is the first layer on the silicon substrate 304.

An interlayer insulation film 336 including a PSG film, a BPSG film, or the like of about 7000 Å in thickness is formed by the CVD method on each surface of the elements such as the P-MOS 320, the N-MOS 321, and the N-MOS transistor 330. After the interlayer insulation film 336 is made flat by heat treatment, an Al electrode 337 as a first wiring layer is formed in a contact hole penetrating through the interlayer insulation film 336 and the gate insulation film 328. On surfaces of the interlayer insulation film 336 and the Al electrode 337, an interlayer insulation film 338 including a SiO₂ film of 10000 Å to 15000 Å in thickness is formed by a plasma CVD method. On the surface of the interlayer insulation film 338, a resistive layer 307 including a TaSiN film of about 500 Å in thickness is formed by a co-sputter method on portions corresponding to the heat-acting portion 311 and the N-MOS transistor 330. The resistive layer 307 is electrically connected with the Al electrode 337 near the drain region 331 via a through-hole formed in the interlayer insulation film 338. On the surface of the resistive layer 307, the wiring 308 of Al as a second wiring layer for a wiring to each electrothermal conversion element is formed. The protective layer 309 on the surfaces of the wiring 308, the resistive layer 307, and the interlayer insulation film 338 includes a SiN film of 3000 Å in thickness formed by the plasma CVD method. The cavitation-resistant film 310 deposited on the surface of the protective layer 309 includes a thin film of about 2000 Å in thickness, which is at least one metal selected from the group consisting of Ta, Fe, Ni, Cr, Ge, Ru, Zr, Ir, and the like. Various materials other than the above-described TaSiN such as TaN_{0.8}, CrSiN, TaAl, WSiN, and the like can be applied as long as the material can generate the film boiling in the liquid.

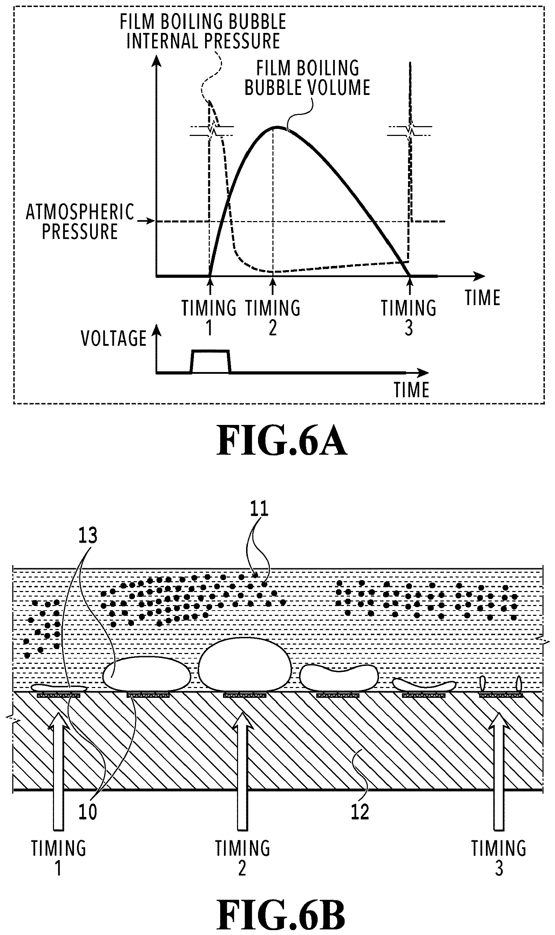

Figs. 6A and 6B are diagrams illustrating the states of the film boiling when a predetermined voltage pulse is applied to the heating element 10. In this case, the case of generating the film boiling under atmospheric pressure is described. In Fig. 6A, the horizontal axis represents time. The vertical axis in the lower graph represents a voltage applied to the heating element 10, and the vertical axis in the upper graph represents the volume and the internal pressure of the film boiling bubble 13 generated by the film boiling. On the other hand, Fig. 6B illustrates the states of the film boiling bubble 13 in association with timings 1 to 3 shown in Fig. 6A. Each of the states is described below in chronological order. The UFBs 11 generated by the film boiling as described later are mainly generated near a surface of the film boiling bubble 13. The states illustrated in Fig. 6B are the states where the UFBs 11 generated by the generating unit 300 are resupplied to the dissolving unit 200 through the circulation route, and the liquid containing the UFBs 11 is resupplied to the liquid passage of the generating unit 300, as illustrated in Fig. 1.

Before a voltage is applied to the heating element 10, the atmospheric pressure is substantially maintained in the chamber 301. Once a voltage is applied to the heating element 10, the film boiling is generated in the liquid in contact with the heating element 10, and a thus-generated air bubble (hereinafter, referred to as the film boiling bubble 13) is expanded by a high pressure acting from inside (timing 1). A bubbling pressure in this process is expected to be around 8 to 10 MPa, which is a value close to a saturation vapor pressure of water.

The time for applying a voltage (pulse width) is around 0.5 µsec to 10.0 µsec, and the film boiling bubble 13 is expanded by the inertia of the pressure obtained in timing 1 even after the voltage application. However, a negative pressure generated with the expansion is gradually increased inside the film boiling bubble 13, and the negative pressure acts in a direction to shrink the film boiling bubble 13. After a while, the volume of the film boiling bubble 13 becomes the maximum in timing 2 when the inertial force and the negative pressure are balanced, and thereafter the film boiling bubble 13 shrinks rapidly by the negative pressure.

In the disappearance of the film boiling bubble 13, the film boiling bubble 13 disappears not in the entire surface of the heating element 10 but in one or more extremely small regions. For this reason, on the heating element 10, further greater force than that in the bubbling in timing 1 is generated in the extremely small region in which the film boiling bubble 13 disappears (timing 3).

The generation, expansion, shrinkage, and disappearance of the film boiling bubble 13 as described above are repeated every time a voltage pulse is applied to the heating element 10, and new UFBs 11 are generated each time.

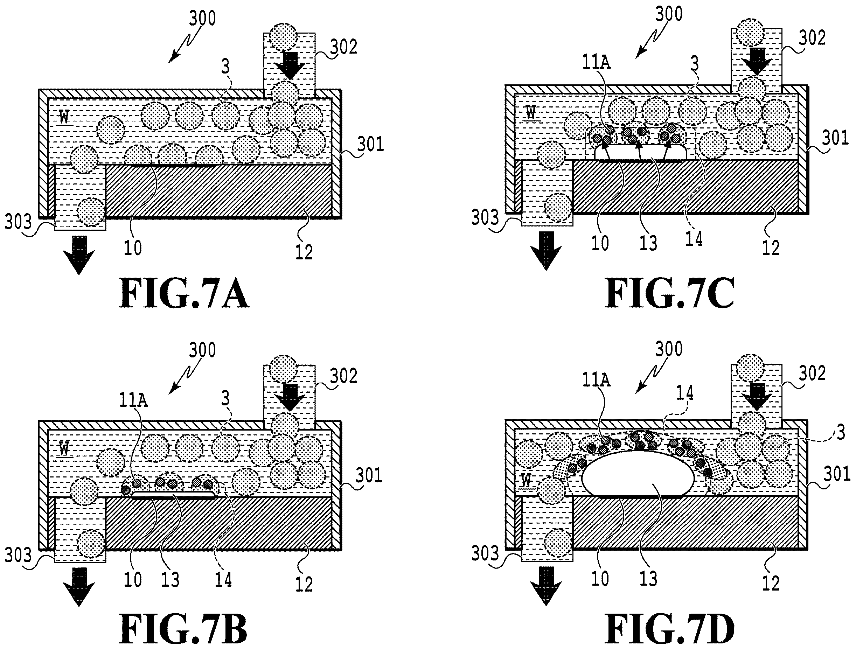

The states of generation of the UFBs 11 in each process of the generation, expansion, shrinkage, and disappearance of the film boiling bubble 13 are further described in detail with reference to Figs. 7A to 10B.

Figs. 7A to 7D are diagrams schematically illustrating the states of generation of the UFBs 11 caused by the generation and the expansion of the film boiling bubble 13. Fig. 7A illustrates the state before the application of a voltage pulse to the heating element 10. The liquid W in which the gas-dissolved liquids 3 are mixed flows inside the chamber 301.

Fig. 7B illustrates the state where a voltage is applied to the heating element 10, and the film boiling bubble 13 is evenly generated in almost all over the region of the heating element 10 in contact with the liquid W. When a voltage is applied, the surface temperature of the heating element 10 rapidly increases at a speed of 10°C/µsec. The film boiling occurs at a time point when the temperature reaches almost 300°C, and the film boiling bubble 13 is thus generated. A region within the heater element 10 excluding its 1-µm outer periphery is an effective bubble generating region, and a film boiling bubble is generated at once in this effective bubble generation region.

Thereafter, the surface temperature of the heating element 10 keeps increasing to around 600 to 800°C during the pulse application, and the liquid around the film boiling bubble 13 is rapidly heated as well. In Fig. 7B, a region of the liquid that is around the film boiling bubble 13 and to be rapidly (within 100 µs or less) heated is indicated as a not-yet-bubbling high temperature region 14. The gas-dissolved liquid 3 within the not-yet-bubbling high temperature region 14 exceeds the thermal dissolution limit and is vaporized almost simultaneously to become the UFB. The thus-vaporized air bubbles have diameters of around 10 nm to 100 nm and large gas-liquid interface energy. A liquid intervenes between bubbles. Thus, the air bubbles float independently in the liquid W without disappearing in a short time. In this disclosure, the air bubbles generated by the thermal action from the generation to the expansion of the film boiling bubble 13 are called first UFBs 11A.

Fig. 7C illustrates the state where the film boiling bubble 13 is expanded. Even after the voltage pulse application to the heating element 10, the film boiling bubble 13 continues expansion by the inertia of the force obtained from the generation thereof, and the not-yet-bubbling high temperature region 14 is also moved and spread by the inertia. Specifically, in the process of the expansion of the film boiling bubble 13, the gas-dissolved liquid 3 within the not-yet-bubbling high temperature region 14 is vaporized as a new air bubble and becomes the first UFB 11A.

Fig. 7D illustrates the state where the film boiling bubble 13 has the maximum volume. As the film boiling bubble 13 is expanded by the inertia, the negative pressure inside the film boiling bubble 13 is gradually increased along with the expansion, and the negative pressure acts to shrink the film boiling bubble 13. At a time point when the negative pressure and the inertial force are balanced, the volume of the film boiling bubble 13 becomes the maximum, and then the shrinkage is started.

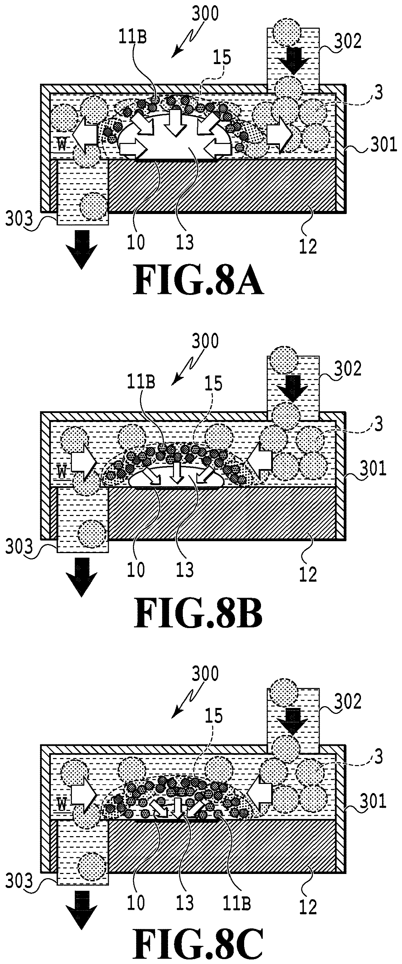

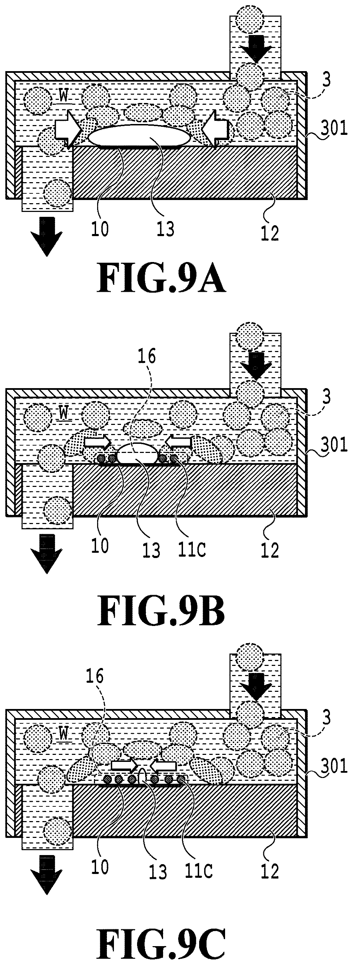

In the shrinking stage of the film boiling bubble 13, there are UFBs generated by the processes illustrated in Figs. 8A to 8C (second UFBs 11B) and UFBs generated by the processes illustrated in Figs. 9Ato 9C (third UFBs 11C). It is considered that these two processes are made simultaneously.

Figs. 8A to 8C are diagrams illustrating the states of generation of the UFBs 11 caused by the shrinkage of the film boiling bubble 13. Fig. 8A illustrates the state where the film boiling bubble 13 starts shrinking. Although the film boiling bubble 13 starts shrinking, the surrounding liquid W still has the inertial force in the expansion direction. Because of this, the inertial force acting in the direction of going away from the heating element 10 and the force going toward the heating element 10 caused by the shrinkage of the film boiling bubble 13 act in a surrounding region extremely close to the film boiling bubble 13, and the region is depressurized. The region is indicated in the drawings as a not-yet-bubbling negative pressure region 15.

The gas-dissolved liquid 3 within the not-yet-bubbling negative pressure region 15 exceeds the pressure dissolution limit and is vaporized to become an air bubble. The thus-vaporized air bubbles have diameters of about 100 nm and thereafter float independently in the liquid W without disappearing in a short time. In this disclosure, the air bubbles vaporized by the pressure action during the shrinkage of the film boiling bubble 13 are called the second UFBs 11B.

Fig. 8B illustrates a process of the shrinkage of the film boiling bubble 13. The shrinking speed of the film boiling bubble 13 is accelerated by the negative pressure, and the not-yet-bubbling negative pressure region 15 is also moved along with the shrinkage of the film boiling bubble 13. Specifically, in the process of the shrinkage of the film boiling bubble 13, the gas-dissolved liquids 3 within a part over the not-yet-bubbling negative pressure region 15 are precipitated one after another and become the second UFBs 11B.

Fig. 8C illustrates the state immediately before the disappearance of the film boiling bubble 13. Although the moving speed of the surrounding liquid W is also increased by the accelerated shrinkage of the film boiling bubble 13, a pressure loss occurs due to a flow passage resistance in the chamber 301. As a result, the region occupied by the not-yet-bubbling negative pressure region 15 is further increased, and a number of the second UFBs 11B are generated.

Figs. 9A to 9C are diagrams illustrating the states of generation of the UFBs by reheating of the liquid W during the shrinkage of the film boiling bubble 13. Fig. 9A illustrates the state where the surface of the heating element 10 is covered with the shrinking film boiling bubble 13.

Fig. 9B illustrates the state where the shrinkage of the film boiling bubble 13 has progressed, and a part of the surface of the heating element 10 comes in contact with the liquid W. In this state, there is heat left on the surface of the heating element 10, but the heat is not high enough to cause the film boiling even if the liquid W comes in contact with the surface. A region of the liquid to be heated by coming in contact with the surface of the heating element 10 is indicated in the drawings as a not-yet-bubbling reheated region 16. Although the film boiling is not made, the gas-dissolved liquid 3 within the not-yet-bubbling reheated region 16 exceeds the thermal dissolution limit and is vaporized. In this disclosure, the air bubbles generated by the reheating of the liquid W during the shrinkage of the film boiling bubble 13 are called the third UFBs 11C.

Fig. 9C illustrates the state where the shrinkage of the film boiling bubble 13 has further progressed. The smaller the film boiling bubble 13, the greater the region of the heating element 10 in contact with the liquid W, and the third UFBs 11C are generated until the film boiling bubble 13 disappears.

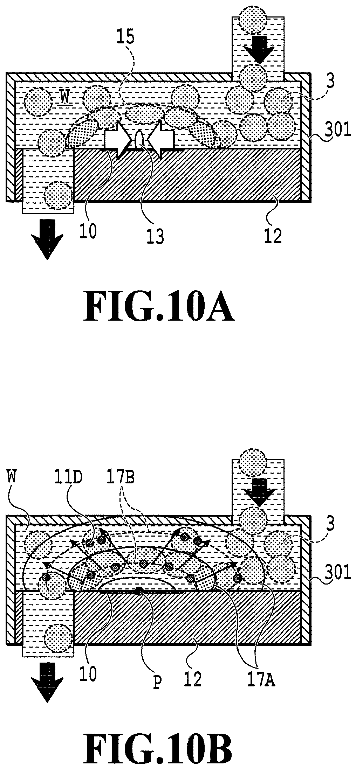

Figs. 10A and 10B are diagrams illustrating the states of generation of the UFBs caused by an impact from the disappearance of the film boiling bubble 13 generated by the film boiling (that is, a type of cavitation). Fig. 10A illustrates the state immediately before the disappearance of the film boiling bubble 13. In this state, the film boiling bubble 13 shrinks rapidly by the internal negative pressure, and the not-yet-bubbling negative pressure region 15 surrounds the film boiling bubble 13.

Fig. 10B illustrates the state immediately after the film boiling bubble 13 disappears at a point P. When the film boiling bubble 13 disappears, acoustic waves ripple concentrically from the point P as a starting point due to the impact of the disappearance. The acoustic wave is a collective term of an elastic wave that is propagated through anything regardless of gas, liquid, and solid, Compression waves of the liquid W, which are a high pressure surface 17A and a low pressure surface 17B of the liquid W, are propagated alternately.

In this case, the gas-dissolved liquid 3 within the not-yet-bubbling negative pressure region 15 is resonated by the shock waves made by the disappearance of the film boiling bubble 13, and the gas-dissolved liquid 3 exceeds the pressure dissolution limit and the phase transition is made in timing when the low pressure surface 17B passes therethrough. Specifically, a number of air bubbles are vaporized in the not-yet-bubbling negative pressure region 15 simultaneously with the disappearance of the film boiling bubble 13. In this disclosure, the air bubbles generated by the shock waves made by the disappearance of the film boiling bubble 13 are called fourth UFBs 11D.

The fourth UFBs 11D generated by the shock waves made by the disappearance of the film boiling bubble 13 suddenly appear in an extremely short time (1 µS or less) in an extremely narrow thin film-shaped region. The diameter is sufficiently smaller than that of the first to third UFBs, and the gas-liquid interface energy is higher than that of the first to third UFBs. For this reason, it is considered that the fourth UFBs 11D have different characteristics from the first to third UFBs 11A to 11C and generate different effects.

Additionally, the fourth UFBs 11D are evenly generated in many parts of the region of the concentric sphere in which the shock waves are propagated, and the fourth UFBs 11D evenly exist in the chamber 301 from the generation thereof. Although many first to third UFBs already exist in the timing of the generation of the fourth UFBs 11D, the presence of the first to third UFBs does not affect the generation of the fourth UFBs 11D greatly. It is also considered that the first to third UFBs do not disappear due to the generation of the fourth UFBs 11D.

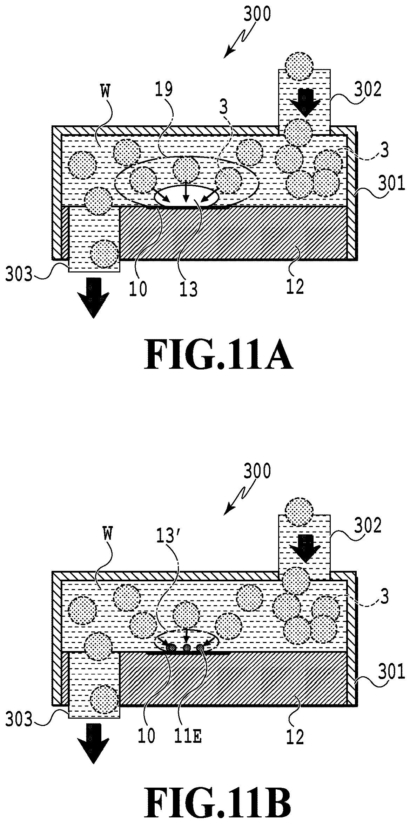

FIGs. 11A and 11B are diagrams showing how the UFBs are generated by a change in the saturation solubility of the liquid W. FIG. 11A shows a state in which the film boiling bubble 13 is generated. Along with the generation of the film boiling bubble 13, the liquid W around the film boiling bubble 13 is also heated, and a high temperature region 19 having a temperature higher than the temperature of the other region is formed around the film boiling bubble 13. As the temperature of the liquid W becomes higher, the saturation solubility of the liquid W becomes lower. Therefore, the saturation solubility of the high temperature region 19 is lower than that of the other region, and the high temperature region 19 is in an oversaturated state in which phase transition to gas is likely to occur. The gas-dissolved liquid 3 in the oversaturated state contacts the film boiling bubble 13, then causes a phase transition, becomes the UFBs, and is vaporized. In the figures, an arrow indicates a direction in which the gas-dissolved liquid 3 is vaporized. Bubbles generated by a change in the saturation solubility of the liquid around the film boiling bubble 13 in this manner are called fifth UFBs 11E.

FIG. 11B shows a state in which the film boiling bubble 13 disappears. The fifth UFBs 11E generated due to contact with the film boiling bubble 13 are attracted in the direction of the heating element 10 along with the disappearance of the film boiling bubble 13, and the liquid W fills a region 13' which was occupied by the film boiling bubble 13. Out of the vaporized UFBs, the ones which are not redissolved in the liquid W remain as the fifth UFB 11E.

As described above, it is expected that the UFBs 11 are generated in the multiple stages from the generation to the disappearance of the film boiling bubble 13 by the heat generation of the heating element 10. The first UFBs 11A, the second UFBs 11B, and the third UFBs 11C are generated near the surface of the film boiling bubble generated by the film boiling. In this case, near means a region within about 20 µm from the surface of the film boiling bubble. The fourth UFBs 11D are generated in a region through which the shock waves are propagated when the air bubble disappears. Although the above example illustrates the stages to the disappearance of the film boiling bubble 13, the way of generating the UFBs is not limited thereto. For example, with the generated film boiling bubble 13 communicating with the atmospheric air before the bubble disappearance, the UFBs can be generated also if the film boiling bubble 13 does not reach the disappearance.

Next, remaining properties of the UFBs are described. The higher the temperature of the liquid, the lower the dissolution properties of the gas components, and the lower the temperature, the higher the dissolution properties of the gas components. In other words, the phase transition of the dissolved gas components is prompted and the generation of the UFBs becomes easier as the temperature of the liquid is higher. The temperature of the liquid and the solubility of the gas are in the inverse relationship, and the gas exceeding the saturation solubility is transformed into air bubbles and appeared in the liquid as the liquid temperature increases.

Therefore, when the temperature of the liquid rapidly increases from normal temperature, the dissolution properties are decreased without stopping, and the generation of the UFBs starts. The thermal dissolution properties are decreased as the temperature increases, and a number of the UFBs are generated.

Conversely, when the temperature of the liquid decreases from normal temperature, the dissolution properties of the gas are increased, and the generated UFBs are more likely to be liquefied. However, such temperature is sufficiently lower than normal temperature. Additionally, since the once generated UFBs have a high internal pressure and large gas-liquid interface energy even when the temperature of the liquid decreases, it is highly unlikely that there is exerted a sufficiently high pressure to break such a gas-liquid interface. In other words, the once generated UFBs do not disappear easily as long as the liquid is stored at normal temperature and normal pressure.

In the above, the first UFBs 11A described with Figs. 7A to 7C , the third UFBs 11C described with Figs. 9A to 9C, and the fifth UFBs 11E described with Figs. 11A and 11B can be described as UFBs that are generated by utilizing such thermal dissolution properties of gas.

On the other hand, in the relationship between the pressure and the dissolution properties of liquid, the higher the pressure of the liquid, the higher the dissolution properties of the gas, and the lower the pressure, the lower the dissolution properties. In other words, the phase transition to the gas of the gas-dissolved liquid dissolved in the liquid is prompted and the generation of the UFBs becomes easier as the pressure of the liquid is lower. Once the pressure of the liquid becomes lower than normal pressure, the dissolution properties are decreased instantly, and the generation of the UFBs starts. The pressure dissolution properties are decreased as the pressure decreases, and a number of the UFBs are generated.

Conversely, when the pressure of the liquid increases to be higher than normal pressure, the dissolution properties of the gas are increased, and the generated UFBs are more likely to be liquefied. However, such pressure is sufficiently higher than the atmospheric pressure. Additionally, since the once generated UFBs have a high internal pressure and large gas-liquid interface energy even when the pressure of the liquid increases, it is highly unlikely that there is exerted a sufficiently high pressure to break such a gas-liquid interface. In other words, the once generated UFBs do not disappear easily as long as the liquid is stored at normal temperature and normal pressure.

In the above, the second UFBs 11B described with Figs. 8Ato 8C and the fourth UFBs 11D described with Figs. 10A and 10B can be described as UFBs that are generated by utilizing such pressure dissolution properties of gas.

Those first to fourth UFBs generated by different causes are described individually above; however, the above-described generation causes occur simultaneously with the event of the film boiling. Thus, at least two types of the first to the fourth UFBs may be generated at the same time, and these generation causes may cooperate to generate the UFBs. It should be noted that it is common for all the generation causes to be induced by the volume change of the film boiling bubble generated by the film boiling phenomenon. In this specification, the method of generating the UFBs by utilizing the film boiling caused by the rapid heating as described above is referred to as a thermal-ultrafine bubble (T-UFB) generating method. Additionally, the UFBs generated by the T-UFB generating method are referred to as T-UFBs, and the liquid containing the T-UFB s generated by the T-UFB generating method is referred to as a T-UFB-containing liquid.

Almost all the air bubbles generated by the T-UFB generating method are 1.0 µm or less, and milli-bubbles and microbubbles are unlikely to be generated. That is, the T-UFB generating method allows dominant and efficient generation of the UFBs. Additionally, the T-UFBs generated by the T-UFB generating method have larger gas-liquid interface energy than that of the UFBs generated by a conventional method, and the T-UFBs do not disappear easily as long as being stored at normal temperature and normal pressure. Moreover, even if new T-UFBs are generated by new film boiling, it is possible to prevent disappearance of the already generated T-UFBs due to the impact from the new generation. That is, it can be said that the number and the concentration of the T-UFBs contained in the T-UFB-containing liquid have the hysteresis properties depending on the number of times the film boiling is made in the T-UFB-containing liquid. In other words, it is possible to adjust the concentration of the T-UFBs contained in the T-UFB-containing liquid by controlling the number of the heating elements provided in the T-UFB generating unit 300 and the number of the voltage pulse application to the heating elements.

Reference to Fig. 1 is made again. Once the T-UFB-containing liquid W with a desired UFB concentration is generated in the T-UFB generating unit 300, the UFB-containing liquid W is supplied to the post-processing unit 400.

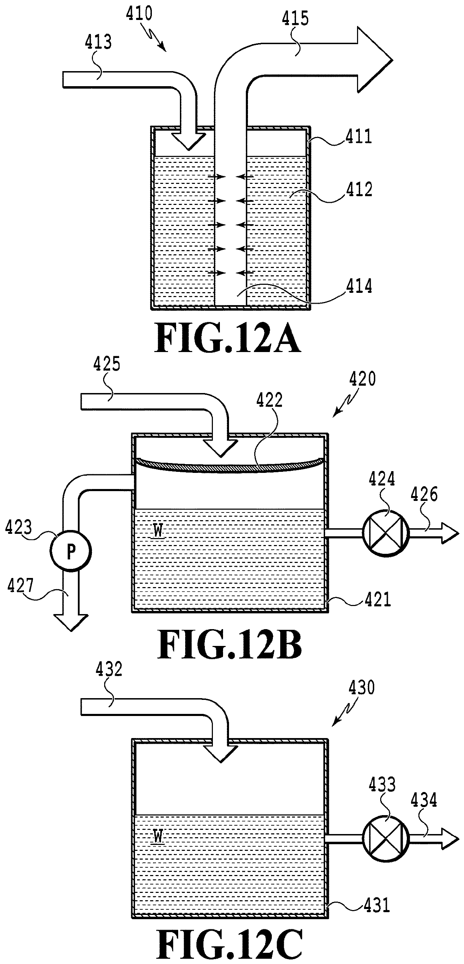

Figs. 12A to 12C are diagrams illustrating configuration examples of the post-processing unit 400. The post-processing unit 400 removes impurities in the UFB-containing liquid W in stages in the order from inorganic ions, organic substances, and insoluble solid substances.

Fig. 12A illustrates a first post-processing mechanism 410 that removes the inorganic ions. The first post-processing mechanism 410 includes an exchange container 411, cation exchange resins 412, a liquid introduction passage 413, a collecting pipe 414, and a liquid discharge passage 415. The exchange container 411 stores the cation exchange resins 412. The UFB-containing liquid W generated by the T-UFB generating unit 300 is injected to the exchange container 411 through the liquid introduction passage 413 and absorbed into the cation exchange resins 412 such that the cations as the impurities are removed. Such impurities include metal materials peeled off from the element substrate 12 of the T-UFB generating unit 300, such as SiO₂, SiN, SiC, Ta, Al₂O₃, Ta₂O₅, and Ir.

The cation exchange resins 412 are synthetic resins in which a functional group (ion exchange group) is introduced in a high polymer matrix having a three-dimensional network, and the appearance of the synthetic resins are spherical particles of around 0.4 to 0.7 mm. A general high polymer matrix is the styrene-divinylbenzene copolymer, and the functional group may be that of methacrylic acid series and acrylic acid series, for example. However, the above material is an example. As long as the material can remove desired inorganic ions effectively, the above material can be changed to various materials. The UFB-containing liquid W absorbed in the cation exchange resins 412 to remove the inorganic ions is collected by the collecting pipe 414 and transferred to the next step through the liquid discharge passage 415. In this process , not all the inorganic ions contained in the UFB-containing liquid W supplied from the liquid introduction passage 413 need to be removed as long as at least a part of the inorganic ions are removed.

Fig. 12B illustrates a second post-processing mechanism 420 that removes the organic substances. The second post-processing mechanism 420 includes a storage container 421, a filtration filter 422, a vacuum pump 423, a valve 424, a liquid introduction passage 425, a liquid discharge passage 426, and an air suction passage 427. Inside of the storage container 421 is divided into upper and lower two regions by the filtration filter 422. The liquid introduction passage 425 is connected to the upper region of the upper and lower two regions, and the air suction passage 427 and the liquid discharge passage 426 are connected to the lower region thereof. Once the vacuum pump 423 is driven with the valve 424 closed, the air in the storage container 421 is discharged through the air suction passage 427 to make the pressure inside the storage container 421 negative pressure, and the UFB-containing liquid W is thereafter introduced from the liquid introduction passage 425. Then, the UFB-containing liquid W from which the impurities are removed by the filtration filter 422 is reserved into the storage container 421.

The impurities removed by the filtration filter 422 include organic materials that may be mixed at a tube or each unit, such as organic compounds including silicon, siloxane, and epoxy, for example. A filter film usable for the filtration filter 422 includes a filter of a sub-µm-mesh (a filter of 1 µm or smaller in mesh diameter) that can remove bacteria, and a filter of a nm-mesh that can remove virus. The filtration filter having such a fine opening diameter may remove air bubbles larger than the opening diameter of the filter. Particularly, there may be the case where the filter is clogged by the fine air bubbles adsorbed to the openings (mesh) of the filter, which may slowdown the filtering speed. However, as described above, most of the air bubbles generated by the T-UFB generating method described above are in the size of 1.0 µm or smaller in diameter, and milli-bubbles and microbubbles are not likely to be generated. That is, since the probability of generating milli-bubbles and microbubbles is extremely low, it is possible to suppress the slowdown in the filtering speed due to the adsorption of the air bubbles to the filter. For this reason, it is favorable to apply the filtration filter 422 provided with the filter of 1 µm or smaller in mesh diameter to the system having the T-UFB generating method.

Examples of the filtration applicable to this embodiment may be a so-called dead-end filtration and cross-flow filtration. In the dead-end filtration, the direction of the flow of the supplied liquid and the direction of the flow of the filtration liquid passing through the filter openings are the same, and specifically, the directions of the flows are made along with each other. In contrast, in the cross-flow filtration, the supplied liquid flows in a direction along a filter surface, and specifically, the direction of the flow of the supplied liquid and the direction of the flow of the filtration liquid passing through the filter openings are crossed with each other. It is preferable to apply the cross-flow filtration to suppress the adsorption of the air bubbles to the filter openings.

After a certain amount of the UFB-containing liquid W is reserved in the storage container 421, the vacuum pump 423 is stopped and the valve 424 is opened to transfer the T-UFB-containing liquid in the storage container 421 to the next step through the liquid discharge passage 426. Although the vacuum filtration method is employed as the method of removing the organic impurities herein, a gravity filtration method and a pressurized filtration can also be employed as the filtration method using a filter, for example.

Fig. 12C illustrates a third post-processing mechanism 430 that removes the insoluble solid substances. The third post-processing mechanism 430 includes a precipitation container 431, a liquid introduction passage 432, a valve 433, and a liquid discharge passage 434.

First, a predetermined amount of the UFB-containing liquid W is reserved into the precipitation container 431 through the liquid introduction passage 432 with the valve 433 closed, and leaving it for a while. Meanwhile, the solid substances in the UFB-containing liquid W are precipitated onto the bottom of the precipitation container 431 by gravity. Among the bubbles in the UFB-containing liquid, relatively large bubbles such as microbubbles are raised to the liquid surface by the buoyancy and also removed from the UFB-containing liquid. After a lapse of sufficient time, the valve 433 is opened, and the UFB-containing liquid W from which the solid substances and large bubbles are removed is transferred to the collecting unit 500 through the liquid discharge passage 434. The example of applying the three post-processing mechanisms in sequence is shown; however, it is not limited thereto, and the order of the three post-processing mechanisms may be changed, or at least one needed post-processing mechanism may be employed.

Reference to Fig. 1 is made again. The T-UFB-containing liquid W from which the impurities are removed by the post-processing unit 400 may be directly transferred to the collecting unit 500 or may be put back to the dissolving unit 200 again. In the latter case, the gas dissolution concentration of the T-UFB-containing liquid W that is decreased due to the generation of the T-UFBs can be compensated to the saturated state again by the dissolving unit 200. If new T-UFBs are generated by the T-UFB generating unit 300 after the compensation, it is possible to further increase the concentration of the UFBs contained in the T-UFB-containing liquid with the above-described properties. That is, it is possible to increase the concentration of the contained UFBs by the number of circulations through the dissolving unit 200, the T-UFB generating unit 300, and the post-processing unit 400, and it is possible to transfer the UFB-containing liquid W to the collecting unit 500 after a predetermined concentration of the contained UFBs is obtained. The above example shows a form in which the UFB-containing liquid processed by the post-processing unit 400 is put back to the dissolving unit 200 and circulated; however, it is not limited thereto, and the UFB-containing liquid after passing through the T-UFB generating unit may be put back again to the dissolving unit 200 before being supplied to the post-processing unit 400 such that the post-processing is performed by the post-processing unit 400 after the T-UFB concentration is increased through multiple times of circulation, for example.

The collecting unit 500 collects and preserves the UFB-containing liquid W transferred from the post-processing unit 400. The T-UFB-containing liquid collected by the collecting unit 500 is a UFB-containing liquid with high purity from which various impurities are removed.

In the collecting unit 500, the UFB-containing liquid W may be classified by the size of the T-UFBs by performing some stages of filtration processing. Since it is expected that the temperature of the T-UFB-containing liquid W obtained by the T-UFB method is higher than normal temperature, the collecting unit 500 may be provided with a cooling unit. The cooling unit may be provided to a part of the post-processing unit 400.

The schematic description of the UFB generating apparatus 1 is given above; however, it is needless to say that the illustrated multiple units can be changed, and not all of them need to be prepared. Depending on the type of the liquid W and the gas G to be used and the intended use of the T-UFB-containing liquid to be generated, a part of the above-described units may be omitted, or another unit other than the above-described units may be added.

For example, when the gas to be contained by the UFBs is the atmospheric air, the degassing unit as the pre-processing unit 100 and the dissolving unit 200 can be omitted. On the other hand, when multiple kinds of gases are desired to be contained by the UFBs, another dissolving unit 200 may be added.

The units for removing the impurities as described in Figs. 12A to 12C may be provided upstream of the T-UFB generating unit 300 or may be provided both upstream and downstream thereof. When the liquid to be supplied to the UFB generating apparatus is tap water, rain water, contaminated water, or the like, there may be included organic and inorganic impurities in the liquid. If such a liquid W including the impurities is supplied to the T-UFB generating unit 300, there is a risk of deteriorating the heating element 10 and inducing the salting-out phenomenon. With the mechanisms as illustrated in Figs. 12A to 12C provided upstream of the T-UFB generating unit 300, it is possible to remove the above-described impurities previously.

### <<Liquid and Gas Usable For T-UFB-Containing Liquid>>

Now, the liquid W usable for generating the T-UFB-containing liquid is described. The liquid W usable is, for example, pure water, ion exchange water, distilled water, bioactive water, magnetic active water, lotion, tap water, sea water, river water, clean and sewage water, lake water, underground water, rain water, and so on. A mixed liquid containing the above liquid and the like is also usable. A mixed solvent containing water and soluble organic solvent can be also used. The soluble organic solvent to be used by being mixed with water is not particularly limited; however, the followings can be a specific example thereof. An alkyl alcohol group of the carbon number of 1 to 4 including methyl alcohol, ethyl alcohol, n-propyl alcohol, isopropyl alcohol, n-butyl alcohol, sec-butyl alcohol, and tert-butyl alcohol. An amide group including N-methyl-2-pyrrolidone, 2-pyrrolidone, 1,3-dimethyl-2-imidazolidinone, N,N-dimethylformamide, and N,N-dimethylacetamide. A keton group or a ketoalcohol group including acetone and diacetone alcohol. A cyclic ether group including tetrahydrofuran and dioxane. A glycol group including ethylene glycol, 1,2-propylene glycol, 1,3-propylene glycol, 1,2-butanediol, 1,3-butanediol, 1,4-butanediol, 1,5-pentanediol, 1,2-hexanediol, 1,6-hexanediol, 3-methyl-1,5-pentanediol, diethylene glycol, triethylene glycol, and thiodiglycol. A group of lower alkyl ether of polyhydric alcohol including ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether. A polyalkylene glycol group including polyethylene glycol and polypropylene glycol. A triol group including glycerin, 1,2,6-hexanetriol, and trimethylolpropane. These soluble organic solvents can be used individually, or two or more of them can be used together.

A gas component that can be introduced into the dissolving unit 200 is, for example, hydrogen, helium, oxygen, nitrogen, methane, fluorine, neon, carbon dioxide, ozone, argon, chlorine, ethane, propane, air, and so on. The gas component may be a mixed gas containing some of the above. Additionally, it is not necessary for the dissolving unit 200 to dissolve a substance in a gas state, and the dissolving unit 200 may fuse a liquid or a solid containing desired components into the liquid W. The dissolution in this case may be spontaneous dissolution, dissolution caused by pressure application, or dissolution caused by hydration, ionization, and chemical reaction due to electrolytic dissociation.

### «Effects of T-UFB Generating Method»

Next, the characteristics and the effects of the above-described T-UFB generating method are described by comparing with a conventional UFB generating method. For example, in a conventional air bubble generating apparatus as represented by the Venturi method, a mechanical depressurizing structure such as a depressurizing nozzle is provided in a part of a flow passage. A liquid flows at a predetermined pressure to pass through the depressurizing structure, and air bubbles of various sizes are generated in a downstream region of the depressurizing structure.

In this case, among the generated air bubbles, since the relatively large bubbles such as milli-bubbles and microbubbles are affected by the buoyancy, such bubbles rise to the liquid surface and disappear. Even the UFBs that are not affected by the buoyancy may also disappear with the milli-bubbles and microbubbles since the gas-liquid interface energy of the UFBs is not very large. Additionally, even if the above-described depressurizing structures are arranged in series, and the same liquid flows through the depressurizing structures repeatedly, it is impossible to store for a long time the UFBs of the number corresponding to the number of repetitions. In other words, it has been difficult for the UFB-containing liquid generated by the conventional UFB generating method to maintain the concentration of the contained UFBs at a predetermined value for a long time.

In contrast, in the T-UFB generating method utilizing the film boiling, a rapid temperature change from normal temperature to about 300°C and a rapid pressure change from normal pressure to around a several megapascal occur locally in a part extremely close to the heating element. The heating element is a rectangular shape having one side of around several tens to hundreds of µm. It is around 1/10 to 1/1000 of the size of a conventional UFB generating unit. Additionally, with the gas-dissolved liquid within the extremely thin film region of the film boiling bubble surface exceeding the thermal dissolution limit or the pressure dissolution limit instantaneously (in an extremely short time under microseconds), the phase transition occurs and the gas-dissolved liquid is precipitated as the UFBs. In this case, the relatively large bubbles such as milli-bubbles and microbubbles are hardly generated, and the liquid contains the UFBs of about 100 nm in diameter with extremely high purity. Moreover, since the T-UFBs generated in this way have sufficiently large gas-liquid interface energy, the T-UFBs are not broken easily under the normal environment and can be stored for a long time.

Particularly, the present invention using the film boiling phenomenon that enables local formation of a gas interface in the liquid can form an interface in a part of the liquid close to the heating element without affecting the entire liquid region, and a region on which the thermal and pressure actions performed can be extremely local. As a result, it is possible to stably generate desired UFBs. With further more conditions for generating the UFBs applied to the generation liquid through the liquid circulation, it is possible to additionally generate new UFBs with small effects on the already-made UFBs. As a result, it is possible to produce a UFB liquid of a desired size and concentration relatively easily.

Moreover, since the T-UFB generating method has the above-described hysteresis properties, it is possible to increase the concentration to a desired concentration while keeping the high purity. In other words, according to the T-UFB generating method, it is possible to efficiently generate a long-time storable UFB-containing liquid with high purity and high concentration.

### «Specific Usage of T-UFB-Containing Liquid»

In general, applications of the ultrafine bubble-containing liquids are distinguished by the type of the containing gas. Any type of gas can make the UFBs as long as an amount of around PPM to BPM of the gas can be dissolved in the liquid. For example, the ultrafine bubble-containing liquids can be applied to the following applications.
- A UFB-containing liquid containing air can be preferably applied to cleansing in the industrial, agricultural and fishery, and medical scenes and the like, and to cultivation of plants and agricultural and fishery products.
- AUFB-containing liquid containing ozone can be preferably applied to not only cleansing application in the industrial, agricultural and fishery, and medical scenes and the like, but to also applications intended to disinfection, sterilization, and decontamination, and environmental cleanup of drainage and contaminated soil, for example.
- A UFB-containing liquid containing nitrogen can be preferably applied to not only cleansing application in the industrial, agricultural and fishery, and medical scenes and the like, but to also applications intended to disinfection, sterilization, and decontamination, and environmental cleanup of drainage and contaminated soil, for example.
- A UFB-containing liquid containing oxygen can be preferably applied to cleansing application in the industrial, agricultural and fishery, and medical scenes and the like, and to cultivation of plants and agricultural and fishery products.
- A UFB-containing liquid containing carbon dioxide can be preferably applied to not only cleansing application in the industrial, agricultural and fishery, and medical scenes and the like, but to also applications intended to disinfection, sterilization, and decontamination, for example.
- A UFB-containing liquid containing perfluorocarbons as a medical gas can be preferably applied to ultrasonic diagnosis and treatment. As described above, the UFB-containing liquids can exert the effects in various fields of medical, chemical, dental, food, industrial, agricultural and fishery, and so on.

In each of the applications, the purity and the concentration of the UFBs contained in the UFB-containing liquid are important for quickly and reliably exert the effect of the UFB-containing liquid. In other words, unprecedented effects can be expected in various fields by utilizing the T-UFB generating method that enables generation of the UFB-containing liquid with high purity and desired concentration. Here is below a list of the applications in which the T-UFB generating method and the T-UFB-containing liquid are expected to be preferably applicable.

### (A) Liquid Purification Application

- With the T-UFB generating unit provided to a water clarification unit, enhancement of an effect of water clarification and an effect of purification of PH adjustment liquid is expected. The T-UFB generating unit may also be provided to a carbonated water server.
- With the T-UFB generating unit provided to a humidifier, aroma diffuser, coffee maker, and the like, enhancement of a humidifying effect, a deodorant effect, and a scent spreading effect in a room is expected.
- If the UFB-containing liquid in which an ozone gas is dissolved by the dissolving unit is generated and is used for dental treatment, burn treatment, and wound treatment using an endoscope, enhancement of a medical cleansing effect and an antiseptic effect is expected.
- With the T-UFB generating unit provided to a water storage tank of a condominium, enhancement of a water clarification effect and chlorine removing effect of drinking water to be stored for a long time is expected.
- If the T-UFB-containing liquid containing ozone or carbon dioxide is used for brewing process of Japanese sake, shochu, wine, and so on in which the high-temperature pasteurization processing cannot be performed, more efficient pasteurization processing than that with the conventional liquid is expected.
- If the UFB-containing liquid is mixed into the ingredient in a production process of the foods for specified health use and the foods with functional claims, the pasteurization processing is possible, and thus it is possible to provide safe and functional foods without a loss of flavor.
- With the T-UFB generating unit provided to a supplying route of sea water and fresh water for cultivation in a cultivation place of fishery products such as fish and pearl, prompting of spawning and growing of the fishery products is expected.
- With the T-UFB generating unit provided in a purification process of water for food preservation, enhancement of the preservation state of the food is expected.
- With the T-UFB generating unit provided in a bleaching unit for bleaching pool water or underground water, a higher bleaching effect is expected.
- With the T-UFB-containing liquid used for repairing a crack of a concrete member, enhancement of the effect of crack repairment is expected.
- With the T-UFBs contained in liquid fuel for a machine using liquid fuel (such as automobile, vessel, and airplane), enhancement of energy efficiency of the fuel is expected.

### (B) Cleansing Application

Recently, the UFB-containing liquids have been receiving attention as cleansing water for removing soils and the like attached to clothing. If the T-UFB generating unit described in the above embodiment is provided to a washing machine, and the UFB-containing liquid with higher purity and better permeability than the conventional liquid is supplied to the washing tub, further enhancement of detergency is expected.
- With the T-UFB generating unit provided to a bath shower and a bedpan washer, not only a cleansing effect on all kinds of animals including human body but also an effect of prompting contamination removal of a water stain and a mold on a bathroom and a bedpan are expected.
- With the T-UFB generating unit provided to a window washer for automobiles, a high-pressure washer for cleansing wall members and the like, a car washer, a dishwasher, a food washer, and the like, further enhancement of the cleansing effects thereof is expected.
- With the T-UFB-containing liquid used for cleansing and maintenance of parts produced in a factory including a burring step after pressing, enhancement of the cleansing effect is expected.
- In production of semiconductor elements, if the T-UFB-containing liquid is used as polishing water for a wafer, enhancement of the polishing effect is expected. Additionally, if the T-UFB-containing liquid is used in a resist removal step, prompting of peeling of resist that is not peeled off easily is enhanced.
- With the T-UFB generating unit is provided to machines for cleansing and decontaminating medical machines such as a medical robot, a dental treatment unit, an organ preservation container, and the like, enhancement of the cleansing effect and the decontamination effect of the machines is expected. The T-UFB generating unit is also applicable to treatment of animals.

### (C) Pharmaceutical Application

- If the T-UFB-containing liquid is contained in cosmetics and the like, permeation into subcutaneous cells is prompted, and additives that give bad effects to skin such as preservative and surfactant can be reduced greatly. As a result, it is possible to provide safer and more functional cosmetics.
- If a high concentration nanobubble preparation containing the T-UFBs is used for contrasts for medical examination apparatuses such as a CT and an MRI, reflected light of X-rays and ultrasonic waves can be efficiently used. This makes it possible to capture a more detailed image that is usable for initial diagnosis of a cancer and the like.
- If a high concentration nanobubble water containing the T-UFBs is used for a ultrasonic wave treatment machine called high-intensity focused ultrasound (HIFU), the irradiation power of ultrasonic waves can be reduced, and thus the treatment can be made more non-invasive. Particularly, it is possible to reduce the damage to normal tissues.
- It is possible to create a nanobubble preparation by using high concentration nanobubbles containing the T-UFBs as a source, modifying a phospholipid forming a liposome in a negative electric charge region around the air bubble, and applying various medical substances (such as DNA and RNA) through the phospholipid.
- If a drug containing high concentration nanobubble water made by the T-UFB generation is transferred into a dental canal for regenerative treatment of pulp and dentine, the drug enters deeply a dentinal tubule by the permeation effect of the nanobubble water, and the decontamination effect is prompted. This makes it possible to treat the infected root canal of the pulp safely in a short time.

### <<UFB generating apparatus of the present embodiment>>

A detailed description is given below of an ultrafine bubble generating apparatus (hereinafter referred to as a UFB generating apparatus) of the present embodiment that can achieve compactness, power saving, and low cost.

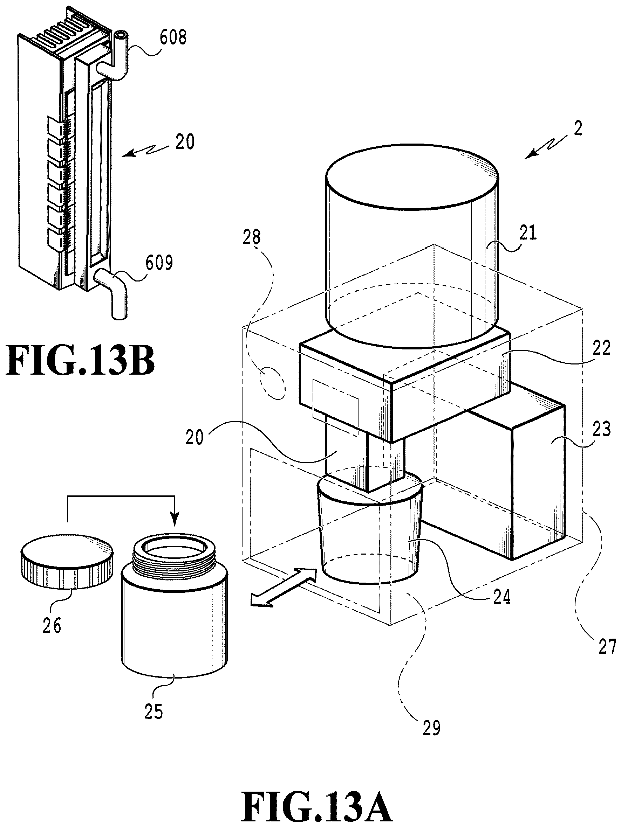

FIGs. 13A and 13B are diagrams of the outer appearance 2 of a UFB generating apparatus and a UFB generating head 20. An apparatus main body 27 which is substantially box-shaped has an ultrafine bubble generating head (hereinafter referred to as a UFB generating head) 20, a coupling unit 22, and a control unit 23.

A power switch 28 is situated on the front surface of the apparatus main body 27. A cartridge 21 that contains a predetermined liquid is detachably attached to the upper surface of the apparatus main body 27. The cartridge 21 is not limited to any particular size, but may be sized to be able to contain, for example, five litters or so of liquid. Once the cartridge 21 is attached, the liquid in the cartridge 21 is supplied to the UFB generating head 20 under its own weight via piping formed inside the coupling unit 22.

The UFB generating head 20 is driven by the control unit 23 and generates UFBs in the supplied liquid according to the mechanism described using FIGs. 7A to 11B. Vertically below the UFB generating head 20, there is provided a placement unit 29 on which a collecting container 24 can be placed.

To generate a UFB-contained liquid with the above configuration, a user attaches the cartridge 21 to an attachment unit formed on the upper surface of the apparatus main body 27, places the collecting container 24 on the placement unit 29, and turns the power switch 28 on. Once the power switch 28 is turned on, the control unit 23 opens a cap (not shown) that covers a pouring port on the UFB generating head 20 and drives the UFB generating head 20. The liquid is supplied from the cartridge 21 to the UFB generating head 20 by the opening of the cap, passes through the inside of the UFB generating head 20, and flows out of the UFB generating head 20. Inside the UFB generating head 20, UFBs are generated in the flowing liquid as driven by the control unit 23.

AUFB-contained liquid generated by the UFB generating head 20 is collected in the collecting container 24. After a predetermined amount of UFB-contained liquid is collected, the user takes the collecting container 24 out. The user can perform a series of actions such as attaching the cartridge 21, accessing the power switch 28, and placing and removing the collecting container 24, through the front side of the apparatus main body.

In the present embodiment, the UFB generating head 20 is approximately 250 mm in height, 50 mm in width, and 70 mm in depth, and the apparatus main body 27 is approximately 500 mm in height. Thus, the UFB generating apparatus 2 of the present embodiment can be placed on a table or used in a limited space in an automobile or aircraft.

In the present embodiment, the cartridge 21, the coupling unit 22, the UFB generating head 20, and the collecting container 24 are fluidly connected in this order and arranged in this order in the direction of gravitational force. Thus, a liquid contained in the cartridge 21 moves from one unit to another under its own weight without needing a drive source such as a pump, and is collected in the collecting container 24 placed at the lowest position.

### <<UFB generating head>>

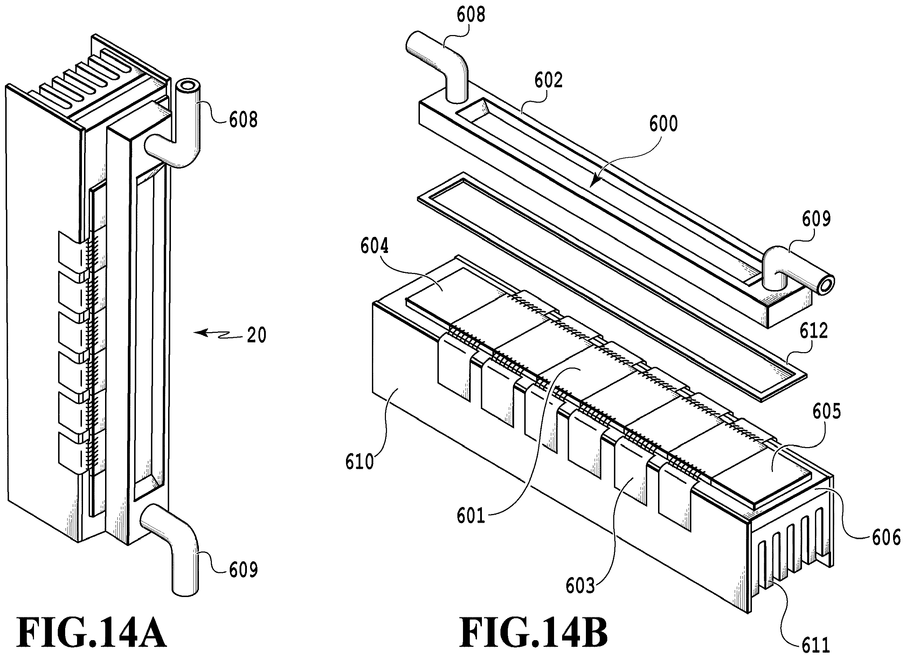

FIGs. 14A and 14B are diagrams showing the configuration of the UFB generating head 20 used in the present embodiment. FIG. 14A is a diagram showing the outer appearance of the UFB generating head 20, and FIG. 14B is an exploded view of the UFB generating head 20.

A liquid supplied from the cartridge 21 flows into the UFB generating head 20 from an inflow pipe 608 and flows out of the UFB generating head 20 from an outflow pipe 609. A plurality of element substrates 601 are placed in the UFB generating head 20. Each element substrate 601 is connected to an aggregation substrate 610 through a flexible wiring substrate 603. As instructed by the control unit 23, the aggregation substrate 610 applies voltage to heater elements placed on the element substrates 601. The element substrate 601 corresponds to the element substrate 12 described using FIG. 4 and the like. Thus, application of voltage to the heater elements placed on the element substrates 601 causes film boiling in the liquid in contact with the element substrates 601. Then, UFBs are generated due to generation, expansion, contraction, and collapse of film boiling bubbles, according to the mechanism described in FIGs. 7Ato 11B. To dissipate heat generated by the element substrates 601, heat dissipation plates 611 are placed on the back surface of a support substrate 606 that supports the element substrates 601.

A brief description is given below of an example method for manufacturing the UFB generating head 20 usable in the present embodiment. First, a predetermined semiconductor treatment is performed on an eight-inch silicon substrate to form sixty element substrate structures on the silicon substrate, each element substrate structure being 22 mm × 17 mm in size and having 12,288 heater elements arranged thereon. Using a dicing apparatus, the silicon substrate is then cut and separated into sixty element substrates 601.

Next, the support substrate 606 made of alumina is prepared, and a row of six element substrates 601 is bonded onto the support substrate 606. On the support substrate 606, the flexible wiring substrate 603 is bonded to each of both sides of each element substrate 601 to convey power and control signals from the aggregation substrate 610 to the element substrate 601. Further, each element substrate 601 and the wiring substrates 603 placed on both sides thereof are connected by wire bonding 607 using gold wires with a diameter of 25 microns.

Next, height adjustment substrates 604, 605 are bonded to end portions of the support substrate 606 in a direction in which the element substrates 601 are arranged, forming a smooth surface continuous with the element substrates 601. Then, a flow channel member 602 made of stainless steel (SUS 316) is mounted on the smooth surface with a frame 612 which is made of PTFE and 0.05 mm in thickness being interposed therebetween. The inflow pipe 608 and the outflow pipe 609 are attached to the flow channel member 602. Thereafter, a cold-setting silicon sealer (TSE 399 manufactured by Momentive Performance Materials Inc.) is applied to the outer periphery of the flow channel member 602, thereby fixing the flow channel member 602 to the support substrate 606. Further, the heat dissipation plates 611 made of aluminum are attached to the back surface of the support substrate 606 with a thermally-conductive adhesive. Instead of the heat dissipation plates 611, Peltier devices or water-cooling members may be placed.

The UFB generating head 20 usable in the present embodiment is thus completed. In the UFB generating head 20, a liquid flow channel 600 connecting to the inflow pipe 608 and the outflow pipe 609 is formed between the flow channel member 602 and the element substrates 601.

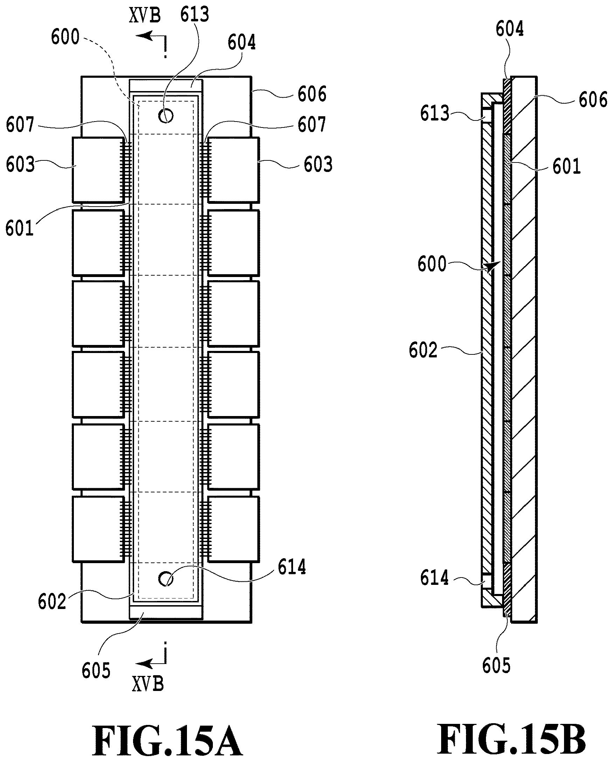

FIGs. 15A and 15B are diagrams showing a front view and a sectional view, respectively, of a drive part of the UFB generating head 20. FIGs. 15A and 15B omit the inflow pipe 608, the outflow pipe 609, the aggregation substrate 610, and the heat dissipation plates 611. The flow channel member 602 is bonded onto the support substrate 606, forming the liquid flow channel 600 between the flow channel member 602 and the support substrate 606. An inflow port 613 connected to the inflow pipe 608 and an outflow port 614 connected to the outflow pipe 609 are formed in the flow channel member 602. A liquid that flows in from the inflow port 613 flows through the liquid flow channel 600 and flows out from the outflow port 614 due to the difference in hydraulic head between the liquid level of the liquid contained in the cartridge 21 and the outlet of the outflow pipe 609. While the liquid flows through the liquid flow channel 600, voltage is applied to the heater elements, thereby generating UFBs in the liquid according to the mechanism described using FIGs. 7A to 11B.

The inventors of the present invention installed the UFB generating head 20 described using FIGs. 14Ato 15B in the UFB generating apparatus 2 described using FIG. 13A, and evaluated UFBs generated. For this evaluation, the UFB generating head 20 was installed in such a posture that the liquid flow channel 600 would extend vertically. Then, the cartridge 21 containing five litters of liquid is attached, and the liquid was caused to flow through the liquid flow channel 600 by the difference in hydraulic head. In the meantime, the heater elements were driven at a driving frequency of 7.5 kHz.

The UFB generating head 20 has an array of six element substrates 601 each having 12,288 heater elements. Hence, the UFB generating head 20 includes a total of 73,728 heater elements. According to the evaluation done by the inventors of the present invention, UFB-contained water containing approximately a billion UFBs per 1 ml was able to be generated in an amount of 180 ml to 200 ml per minute.

Although in the mode described above, the liquid flows down vertically through the liquid flow channel 600, the liquid flow channel 600 does not necessarily have to extend vertically. As long as the cartridge 21 connected to the inflow port 613 is situated at a higher position than the outflow port 614 in a direction of gravitational force, a flow is generated in the liquid flow channel 600 which connects them in a direction determined by the difference in hydraulic head between them. For example, the above-described configuration may be such that, using the difference in hydraulic head, a liquid is caused to flow in from the pipe 609 located at a lower position in the direction of gravitational force and is taken out from the pipe 608 located at an upper position in the direction of gravitational force. Making such a flow allows bubbles retained in the flow channel to be actively discharged along with the flow of the liquid.

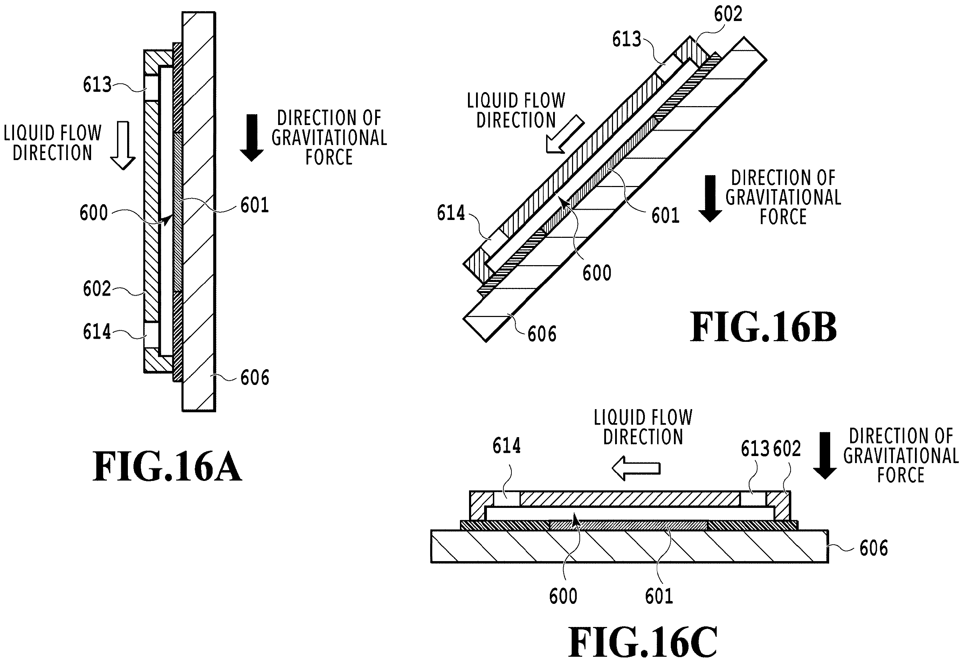

FIGs. 16A to 16C show cases where the liquid flow channel 600 is oriented in various directions. For simplicity, only one element substrate 601 is placed on the support substrate 606 here. FIG. 16A shows a case where the liquid flow channel 600 extends vertically. In this case, the direction of a flow of liquid in the liquid flow channel 600 is the same as the direction of gravitational force.

FIG. 16B shows a case where the liquid flow channel 600 extends in a direction slanted from the vertical direction by 45 degrees. In this case, the direction of a flow of liquid is slanted from the direction of gravitational force by 45 degrees. FIG. 16C shows a case where the liquid flow channel 600 extends horizontally. Even in this case, the liquid flows through the liquid flow channel 600 from the inflow port 613 to the outflow port 614, or in other words, horizontally, as long as the liquid level in the cartridge 21 connected to the inflow port 613 is at a higher position than the outlet of the outflow pipe 609 connected to the outflow port 614. However, in FIGs. 16A to 16C, the liquid flows more slowly in the order of FIG. 16A, FIG. 16B, and FIG. 16C. In other words, the extension direction of the liquid flow channel 600 of the UFB generating head 20 can be determined so as to obtain an appropriate flow rate.

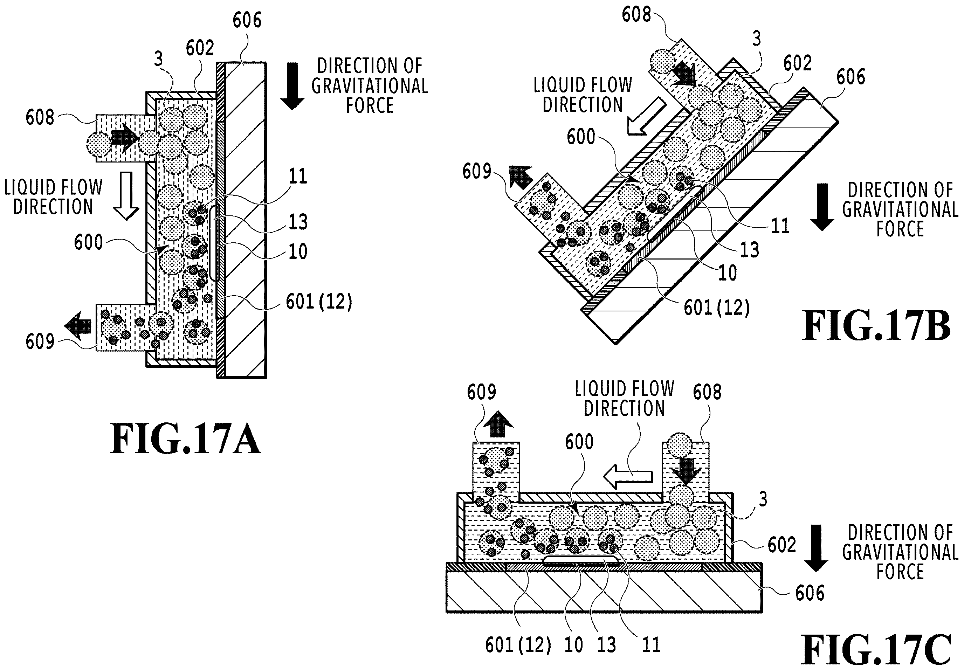

FIGs. 17A to 17C are schematic diagrams showing states where UFBs 11 are generated while a liquid is caused to flow in the liquid flow channel 600 in orientations shown in FIGs. 16A to 16C, respectively. By the application of voltage to the heater elements 10 at a frequency of several kilo hertz, the UFBs 11 are generated in the liquid according to the mechanism described using FIGs. 7A to 11B.

The UFBs 11 thus generated are fine bubbles with a diameter of less than 1 µm and are affected by almost no buoyancy. Thus, the UFBs 11 generated flow through the liquid flow channel 600 toward the outflow port 614 along with the surrounding liquid, irrespective of the extension direction of the liquid flow channel 600. Hence, under a certain driving frequency, the lower the flow rate in the liquid flow channel 600, the higher the concentration of UFBs in the UFB-contained liquid, and the higher the flow rate in the liquid flow channel 600, the lower the concentration of UFBs in the UFB-contained liquid.

According to the study done by the inventors of the present invention, it is preferable that the flow rate of liquid in the liquid flow channel 600 be 10 ng/s or less for each heater element 10. To obtain such a flow rate, the substantial difference in hydraulic head (the pressure difference) between the inflow port 613 and the outflow port 614 in the liquid flow channel 600 is preferably 1 kPa or less. For example, in a liquid flow channel with an inner diameter of 2 mm or greater and a length of 10 mm or greater, a flow rate of 2000 g/minute or less was obtained under a hydraulic head pressure of 1 kPa or less.

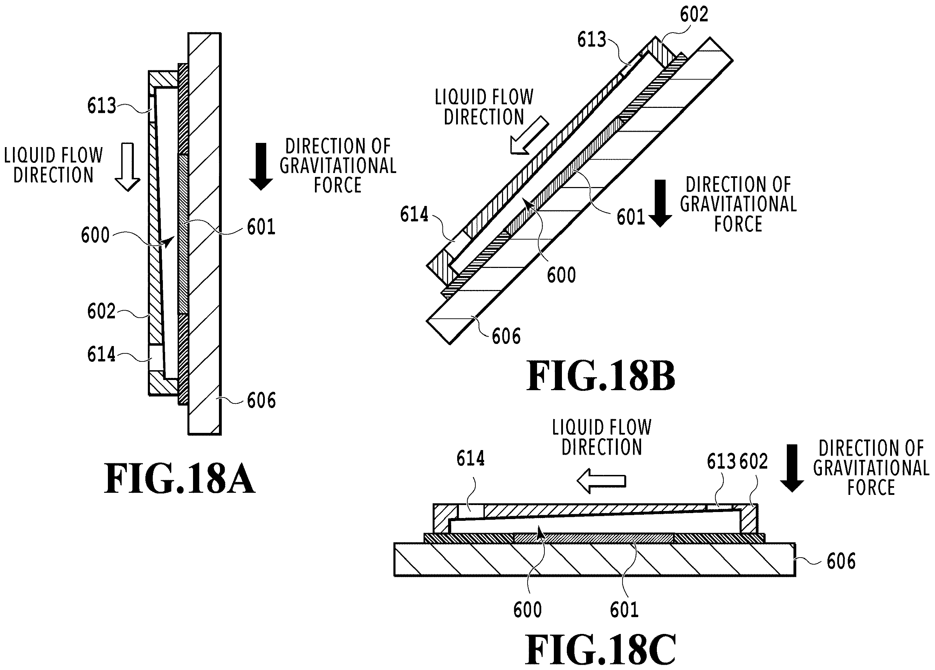

FIGs. 18A to 18C are diagrams showing a modification of the liquid flow channel 600. In this modification, the height of the flow channel is reduced gradually from the inflow port 613 side to the outflow port 614 side. In other words, the flow channel becomes narrower in the flow direction of liquid. Such a configuration can promote a flow from the inflow port 613 to the outflow port 614 more than the configuration in FIGs. 17A to 17C does.

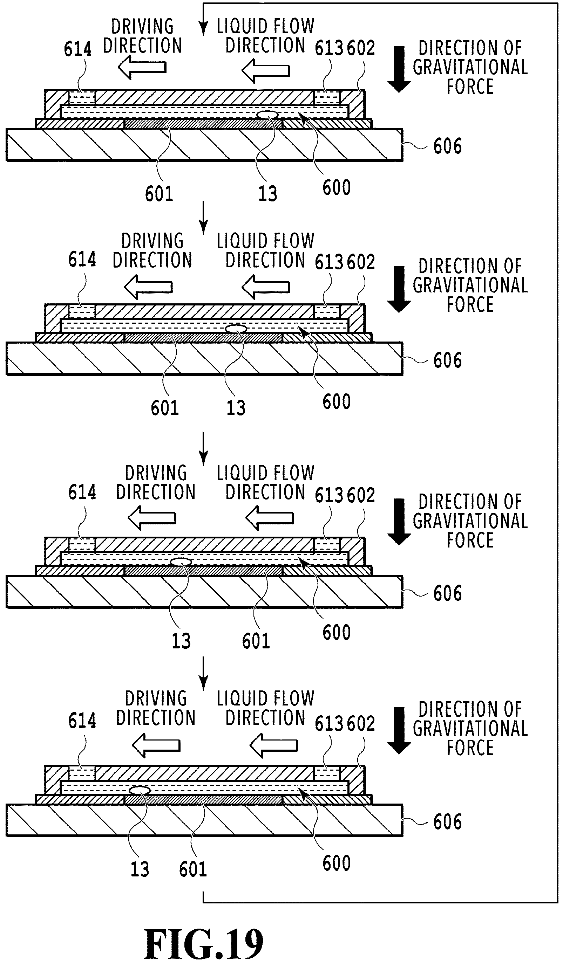

FIG. 19 shows a method of promoting a flow of liquid from the inflow port 613 to the outflow port 614 by controlling the order in which the heater elements arranged on the element substrate 601 are driven. Once voltage is applied to a heater element, the pressure of the film boiling bubble 13 generated thereby moves the surrounding liquid. Hence, by driving the heater elements arranged on the element substrate sequentially from the inflow port 613 side to the outflow port 614 side as illustrated in FIG. 19 and repeating such driving, a flow can be promoted in the same direction as the direction of such driving.

### <<Cartridge>>

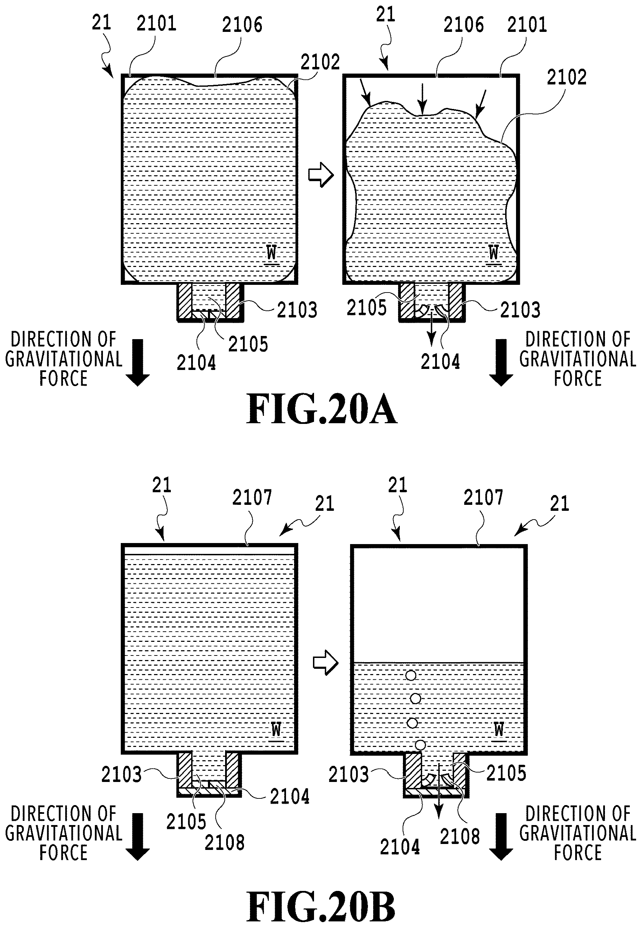

FIGs. 20A and 20B show examples of the cartridge 21 usable in the UFB generating apparatus 2 of the present embodiment. The cartridge 21 in FIG. 20A has a double structure including a rigid outer container 2101 and a deformable inner container 2102, and a liquid W is contained in the inner container 2102. The outer container 2101 and the inner container 2102 are joined together only at a connection unit 2103 that connects to the apparatus main body 27. The top surface of the outer container 2101 is provided with an atmosphere communication port 2106, and atmospheric pressure is maintained inside the outer container 2101, irrespective of the shape of the inner container 2102.

At the connection unit 2103, a connection port 2105 that fluidly connects to the apparatus main body 27 is sealed by a seal member 2104.

By the attachment of the cartridge 21 to the apparatus main body 27, the seal member 2104 is ripped open, causing the liquid contained in the inner container 2102 to flow into the piping in the coupling unit 22 (see FIG. 13 A) under its own weight. The deformable inner container 2102 contracts as the liquid W contained flows out and the internal pressure decreases. Due to the contraction of the inner container 2102, atmosphere flows into a space between the outer container 2101 and the inner container 2102 from the atmosphere communication port 2106. In the cartridge 21 described above, the liquid can flow at a certain speed in the liquid flow channel 600 due to a certain hydraulic pressure applied to the UFB generating head 20.

The cartridge 21 having a double structure like the one shown in FIG. 20A is suitable for containing a liquid in which a gas other than air is dissolved. What is suitable for the inner container 2102 of the cartridge 21 is, for example, a multi-layer film with high gas barrier property, having a resin laminated on a substrate which is a biaxially oriented nylon film (SUPERNYL manufactured by Mitsubishi Chemical Corporation) or an ethylene vinyl alcohol copolymer (EVAL manufactured by KURARAY CO., LTD.). Such a film can suppress penetration of air into the liquid and alternation of the liquid.

However, in a case where a gas dissolved in the liquid is ozone, it is preferable to use a film of polytetrafluoroethylene (PTFE) or perfluoroalkoxy alkanes (PFA), which is hard to oxide. As the seal member 2104 used in the connection unit 2103, a fluorine rubber, or more specifically a vinylidene fluoride (FKM) rubber, may be preferably used.

FIG. 20B shows the cartridge 21 formed only by a rigid container 2107. Although no atmosphere communication port is provided in the container 2107, a valve 2108 that opens on a decrease in the internal pressure is provided at the connection port 2105 of the connection unit 2103.

By the attachment of the cartridge 21 to the apparatus main body 27, the liquid contained in the container 2107 flows into the piping in the coupling unit 22 (see FIG. 13 A) under its own weight. The internal pressure of the container 2107 decreases as the liquid W flows out, but opening the valve 2108 causes atmosphere to enter the container 2107, maintaining a certain inner pressure. In other words, the cartridge 21 shown in Fig. 20B still can cause a liquid to flow through the liquid flow channel 600 at a favorable speed due to a certain hydraulic pressure applied to the UFB generating head 20.

Such a cartridge 21 is suitable for containing non-degassed water, such as distilled water (purified water), city water, spring water, and seawater.

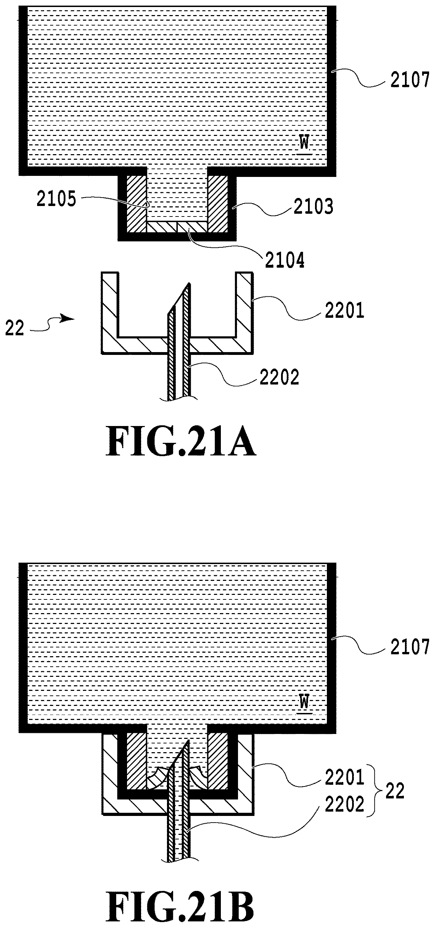

FIGs. 21A and 21B are diagrams showing a connection method of how the cartridge 21 is attached to the coupling unit 22 (see FIG. 13 A) of the UFB generating apparatus 2. FIGs. 21A and 21B show the cartridge 21 and the coupling unit 22 before and after the attachment, respectively. The coupling unit 22 of the UFB generating apparatus 2 includes a recessed coupling cap 2201 and a hollow needle 2202 that sticks out from the bottom portion of the recessed shape. A user fits the connection unit 2103 of the cartridge 21 into the recessed coupling cap 2201, and thereby the hollow needle 2202 penetrates through the seal member 2104 and enters the liquid. Consequently, the cartridge 21 and the UFB generating head 20 are connected to each other fluidly.

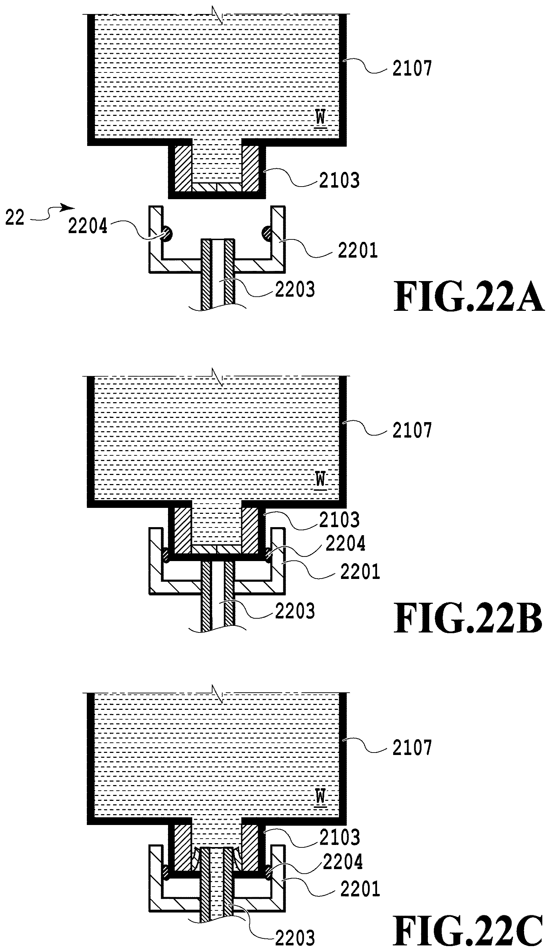

FIGs. 22A to 22C are diagrams showing another example of a connection method of how the cartridge 21 is attached to the coupling unit 22 of the UFB generating apparatus 2. FIGs. 22A, 22B, and 22C show the cartridge 21 and the coupling unit 22 before, in the middle of, and after the attachment, respectively.

In this example, the coupling unit 22 includes the recessed coupling cap 2201, a pipe 2203 that sticks out from the bottom portion of the recessed shape, and an O-ring 2204 placed on the inner circumference of the recessed shape. A user fits the connection unit 2103 of the cartridge 21 into the recessed coupling cap 2201, and in this event, the connection unit 2103 advances with its outer circumference in contact with the O-ring 2204 (FIG. 22B). Then, the pipe 2203 penetrates through the seal member 2104 and enters the liquid. Consequently, the cartridge 21 and the UFB generating head 20 are connected to each other fluidly (FIG. 22C). In this state, the O-ring 2204 keeps the connected portion airtight. The inner diameter of the pipe 2203 is larger than that of the hollow needle 2202 shown in FIGs. 21A and 21B. Thus, this example allows more liquid to flow into the UFB generating head 20 than the example in FIGs. 21A and 21B does.

The cartridge 21 described above can be removed from the UFB generating apparatus 2 or replaced with a new one after the container becomes empty. The cartridge 21 after use can be recycled by being collected or refilled with a desired liquid. For example, a UFB-contained liquid may be manufactured by attachment of one of the two types of cartridges 21 described in FIGs. 20A and 20B, and then, a different UFB-contained liquid may be manufactured thereafter by attachment of the other one of the cartridges 21.

However, in a case of attaching a new cartridge 21 containing a liquid in which a gas different from the one in the previous cartridge 21 is dissolved, it is preferable to drain a certain amount of the liquid remaining in the piping into a collecting container or the like and then start driving the UFB generating head 20. The amount of the remaining liquid to be drained may be set to an amount obtained by multiplying the volume of the piping with a predetermined factor of safety.

### «Collecting container»

Reference is made back to FIG. 13 A. The collecting container 24 may be a cup-shaped container, or a container 25 for storage sealed airtightly by a screw cap 26. The material of the collecting container 24, 25 may be, although not limited to, glass, coated paper, polypropylene (PP), polyethylene terephthalate (PET), or the like. In a case where a liquid contained in the cartridge 21 is ozone-dissolved water, borosilicate lead glass, fluorine resin (PTFE, PFA), or the like is suitable. Using these materials help suppress alternation of a UFB-contained liquid caused by oxidation of the container.

### <<Procedure to generate a UFB-contained liquid>>

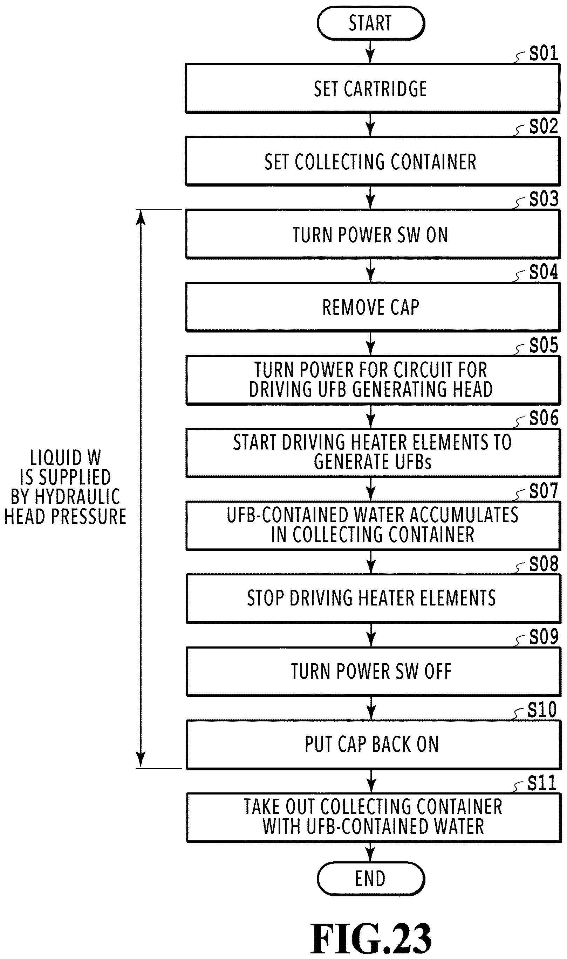

FIG. 23 is a flowchart illustrating a procedure to manufacture a UFB-contained liquid using the UFB generating apparatus 2 in FIG. 13 A, the procedure being performed by a user and the control unit 23.

To manufacture a desired UFB-contained liquid, a user first attaches a desired cartridge 21 to the apparatus main body 27 in S01. In S02, the user places the collecting container 24 on the placement unit 29. In S03, the user turns the power switch 28 of the apparatus main body 27 on.

Once the power switch 28 is turned on, in S04 the control unit 23 removes a cap (not shown) covering the outflow pipe 609 of the UFB generating head 20, thereby opening the outflow pipe 609. As a result, a flow is formed such that a liquid contained in the cartridge 21 is supplied to the UFB generating head 20 through the coupling unit 22 and flows out from the outflow pipe 609.

In S05, the control unit 23 starts driving the UFB generating head 20. Specifically, the control unit 23 drives each of the heater elements placed on the element substrate 601 at a predetermined driving frequency. Thereby, UFBs are generated in the liquid flowing through the liquid flow channel 600 according to the mechanism described in FIGs. 7A to 11B (S06). Then, a UFB-contained liquid containing desired UFBs gradually accumulates in the collecting container 24 placed at a lower position than the UFB generating head 20 in the direction of gravitational force.

Once a liquid level sensor (not shown) or the like detects that a predetermined amount of UFB-contained liquid has accumulated in the collecting container 24 (S07), the control unit 23 stops driving the UFB generating head 20 in S08.

In S09, the user turns the power switch 28 off.

Once the power switch 28 is turned off, in S10 the control unit 23 recaps the outflow pipe 609 opened in S04.

In S11, the user takes out the collecting container 24 in which the UFB-contained liquid has accumulated. This procedure thus ends.

In the series of steps described in FIG. 23, from S04 in which the control unit 23 opens the cap to S10 in which the control unit 23 closes the cap, the liquid flows only due to the difference in hydraulic head, or in other words, gravitational force. Thus, the UFB generating apparatus of the present embodiment does not need equipment such as a high-pressure pump to cause the liquid to flow, and operations in the UFB generation processing other than driving of the UFB generating head 20, such as opening and closing the cap, can be carried out using a small amount of power.

### «Modification of the UFB generating head»

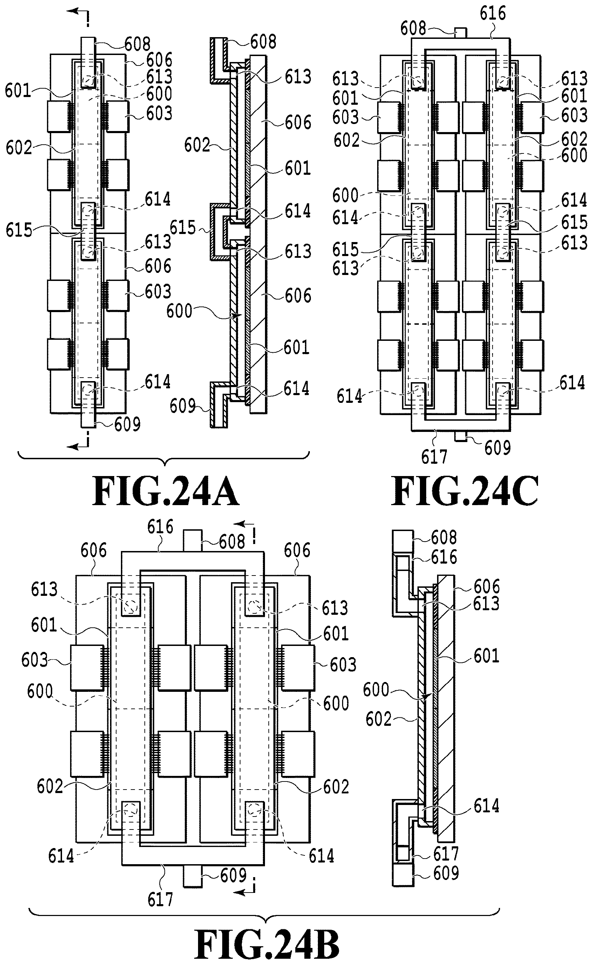

FIGs. 24A to 24C are diagrams illustrating a modification of a configuration part of the UFB generating head 20. FIG. 24A shows two support substrates 606 linked in serial, each support substrate 606 having two element substrates 601 arranged thereon. Specifically, the outflow port 614 of one substrate is linked with the inflow port 613 of the other substrate using a linkage pipe 615. In such a configuration, a liquid from the cartridge 21 flows in the following order: the inflow pipe 608, the first liquid flow channel 600, the linkage pipe 615, the second liquid flow channel 600, and the outflow pipe 609.

FIG. 24B shows two support substrates 606 used in FIG. 24A linked in parallel. Specifically, a liquid that flows in from the inflow pipe 608 is split by a split pipe 616, and the split parts of liquid flow into the respective inflow ports 613 of the two substrates. Then, the parts of the liquid that flow out from the respective two outflow ports 614 are merged together by a merge pipe 617 and flow out from the outflow pipe 609. In such a configuration, the liquid from the cartridge 21 flows in the following order: the inflow pipe 608, the split pipe 616, the two liquid flow channels 600, the merge pipe 617, and the outflow pipe 609.

In a comparison between the configuration in FIG. 24A and the configuration in FIG. 24B, the configuration in FIG. 24A is suitable for generating a high-concentration UFB-contained liquid in a limited space in terms of width, whereas the configuration in FIG. 24B is suitable for generating a UFB-contained liquid in a short period of time in a limited space in terms of height.

FIG. 24C shows a configuration combining the configurations described in FIGs. 24A and 24B. This configuration allows a high-concentration UFB-contained liquid to be generated in a short period of time at a relatively high flow rate.

Although two element substrates 601 are arranged on each support substrate 606 in FIGs. 24A to 24C, it goes without saying that the number of element substrates 601 arranged on one support substrate 606 may be changed. As described using FIGs. 15A and 15B, more element substrates may be arranged on one support substrate. In any case, the UFB generating apparatus can offer a wide variety of applications by using modules each having a predetermined number of element substrates 601 arranged on one support substrate 606 and combining them in serial or in parallel.

### «Modification of the UFB generating apparatus»

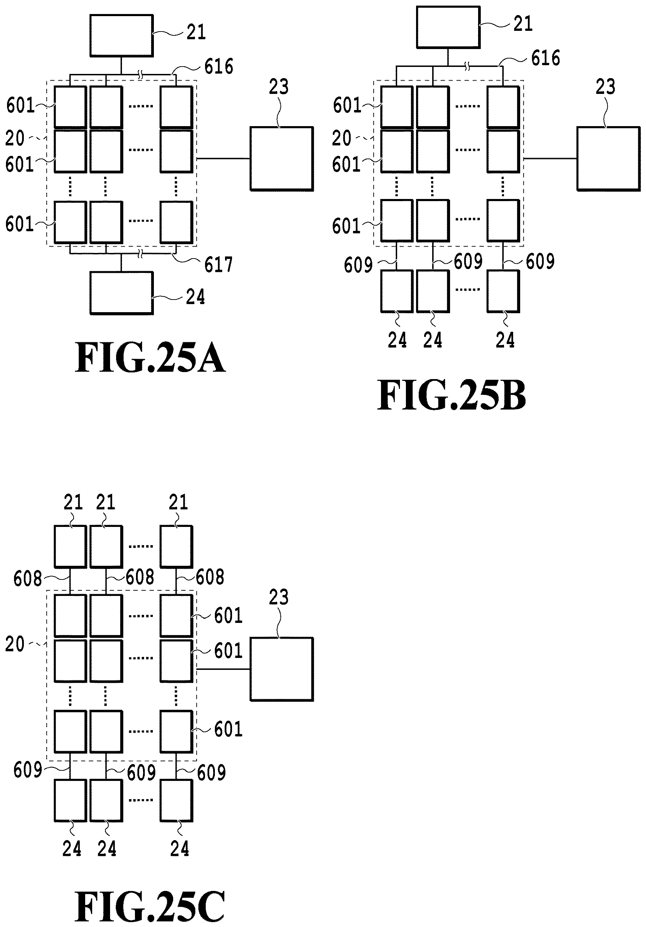

FIGs. 25A to 25C are diagrams showing a modification of the correspondences between the cartridge 21, the liquid flow channel in the UFB generating head 20, and the collecting container 24 in the UFB generating apparatus 2. FIG. 25A shows a mode where the correspondences between the cartridge 21, the liquid flow channel, and the collecting container 24 is 1:N:1. A liquid flowing in from one cartridge 21 is split into N liquid flow channels by the split pipe 616, and after UFBs are generated in the liquid flow channels, the split liquid parts are merged by the merge pipe 617, and collected by one collecting container 24.

FIG. 25B shows a mode where the correspondences between the cartridge 21, the liquid flow channel, and the collecting container 24 is 1 :N:N. A liquid flowing in from one cartridge 21 is split into N flow channels by the split pipe 616, and after UFBs are generated in the flow channels, the split liquid parts are collected by respective N collecting containers 24.

FIG. 25C shows a mode where the correspondences between the cartridge 21, the flow channel, and the collecting container 24 is N:N:N. A liquid flows in from N cartridges 21 into N flow channels, and after UFBs are generated in the flow channels, the liquid parts are collected by respective N collecting containers 24. In any of these cases, the UFB generating apparatus 2 is controlled by one control unit 23.

As described above, according to the present embodiment, a liquid containing unit (cartridge) for supplying a liquid to a UFB generating head is fluidly linked to the UFB generating head at a position higher than the UFB generating head in the direction of gravitational force. As a result, there is no need to provide equipment such as a pump for causing a liquid to flow, obtaining the UFB generating apparatus that can achieve compactness, power saving, and low cost.

### <<Other embodiments>>

In the examples describe above, the cartridge 21 which is replaceable relative to the apparatus main body 27 is used as the liquid containing unit capable of supplying a liquid to the UFB generating head 20. However, the liquid containing unit may be a tank fixed to the UFB generating apparatus 2. In this case, a user may pour a liquid such as tap water into the fixed tank.

In the above embodiment, the heater elements to which voltage is repeatedly applied may be consumables. In such a case, the UFB generating head 20 may be replaceable relative to the UFB generating apparatus 2.

Although the above describes steps up to collecting a UFB-contained liquid generated by the UFB generating head 20, there may be an additional step for the UFB generating apparatus 2. For example, a unit that heats a UFB-contained liquid generated by the UFB generating head 20 may be additionally provided to make the UFB generating apparatus function as a water heater for UFB water. Further, the UFB generating apparatus 2 may be applied to a cooking device or the like that uses a UFB-contained liquid, such as a coffee maker.

## Claims

1. An ultrafine bubble generating apparatus (2) comprising:
an ultrafine bubble generating head (20) capable of generating ultrafine bubbles by causing film boiling in a liquid in a flow channel (600); and
a liquid containing unit (21) fluidly linked to the ultrafine bubble generating head (20) at a position higher than the ultrafine bubble generating head (20) in a direction of gravitational force and capable of supplying the liquid to the ultrafine bubble generating head (20), **characterized in that**
the liquid containing unit (21) and the ultrafine bubble generating head are arranged such that a difference in hydraulic head between the ultrafine bubble generating head (20) and the liquid containing unit (21) causes the liquid to flow through the flow channel (600) in the ultrafine bubble generating head (20).

2. The ultrafine bubble generating apparatus according to claim 1, wherein the ultrafine bubble generating apparatus is configured such that the liquid flowing out from the flow channel can be collected in a collection container (24) at a position lower than the ultrafine bubble generating head in the direction of gravitational force.

3. The ultrafine bubble generating apparatus according to claim 1 or 2, wherein
the flow channel extends in the direction of gravitational force.

4. The ultrafine bubble generating apparatus according to claim any one of claims 1 to 3, wherein
the flow channel becomes narrower in a direction in which the liquid flows.

5. The ultrafine bubble generating apparatus according to any one of claims 1 to 4, wherein
the flow channel is provided with at least one element substrate on which a plurality of heater elements that cause film boiling upon application of voltage are arranged.

6. The ultrafine bubble generating apparatus according to claim 5, further comprising a control unit (23) configured to drive the plurality of heater elements sequentially in a direction in which the liquid flows.

7. The ultrafine bubble generating apparatus according to claim 5 or 6, wherein
the ultrafine bubble generating head includes the flow channel, the element substrate, an inflow pipe through which the liquid supplied from the liquid containing unit flows into the flow channel, and an outflow pipe through which the liquid in the flow channel flows out.

8. The ultrafine bubble generating apparatus according to claim 5 or 6, wherein
the ultrafine bubble generating head is formed by modules which are fluidly connected at least in series or in parallel, the modules each including the flow channel, the at least one element substrate, an inflow pipe through which the liquid supplied from the liquid containing unit flows into the flow channel, and an outflow pipe through which the liquid in the flow channel flows out.

9. The ultrafine bubble generating apparatus according to any one of claims 1 to 8, wherein
the liquid contained in the liquid containing unit is a liquid in which a predetermined gas is dissolved, and
the ultrafine bubbles generated by the ultrafine bubble generating head contains the predetermined gas.

10. The ultrafine bubble generating apparatus according to any one of claims 1 to 9, wherein
the liquid containing unit is a replaceable cartridge.

11. The ultrafine bubble generating apparatus according to claim 10, wherein
the cartridge includes a rigid outer container provided with an atmosphere communication port and a deformable inner container that contains the liquid.

12. The ultrafine bubble generating apparatus according to claim 10, wherein
the cartridge includes a container that contains the liquid and a valve that opens on a decrease in an internal pressure in the container.

13. The ultrafine bubble generating apparatus according to any one of claims 1 to 2, wherein
pressure of the difference in hydraulic head is 1 kPa or less.

14. The ultrafine bubble generating apparatus according to any one of claims 1 to 13, wherein
the flow channel is 2 mm or greater in inner diameter and 10 mm or greater in length.

15. The ultrafine bubble generating apparatus according to any one of claims 1 to 14, wherein the flow channel is arranged such that a rate at which the liquid flows through the flow channel is 2000 g/minute or less.

16. The ultrafine bubble generating apparatus according to claim 1 or 2,
wherein the flow channel is arranged such that the liquid flows through the flow channel in the direction of gravitational force.

17. The ultrafine bubble generating apparatus according to claim 1 or 2,
wherein the flow channel is arranged such that the liquid flows through the flow channel in a direction opposite from the direction of gravitational force.

18. An ultrafine bubble generating method comprising, in a state wherein a liquid containing unit (21) is connected at a higher position in a direction of gravitational force fluidly to an ultrafine bubble generating head (20) that includes a flow channel (600) and a heater element (10),
flowing the liquid from the liquid containing unit (21) through the flow channel (600), wherein a difference in hydraulic head between the ultrafine bubble generating head (20) and the liquid containing unit (21) causes the liquid to flow through the flow channel (600); and
causing film boiling in the liquid flowing in the flow channel (600) by heating the heater element (10).

## Patentansprüche

1. Vorrichtung (2) zur Erzeugung ultrafeiner Bläschen, umfassend:
einen Kopf (20) zur Erzeugung ultrafeiner Bläschen, der in der Lage ist, ultrafeine Bläschen zu erzeugen, indem er Filmsieden einer Flüssigkeit in einem Strömungskanal (600) veranlasst; und
eine Flüssigkeitsbehältereinheit (21), die mit dem Kopf (20) zur Erzeugung ultrafeiner Bläschen an einer Position, die in Schwerkraftrichtung höher als der Kopf (20) zur Erzeugung ultrafeiner Bläschen liegt, in Fluidverbindung steht und in der Lage ist, die Flüssigkeit dem Kopf (20) zur Erzeugung ultrafeiner Bläschen zuzuführen, **dadurch gekennzeichnet, dass**
die Flüssigkeitsbehältereinheit (21) und der Kopf zur Erzeugung ultrafeiner Bläschen so angeordnet sind, dass ein hydraulischer Höhenunterschied zwischen dem Kopf (20) zur Erzeugung ultrafeiner Bläschen und der Flüssigkeitsbehältereinheit (21) veranlasst, dass die Flüssigkeit durch den Strömungskanal (600) in den Kopf (20) zur Erzeugung ultrafeiner Bläschen strömt.

2. Vorrichtung zur Erzeugung ultrafeiner Bläschen nach Anspruch 1, wobei die Vorrichtung zur Erzeugung ultrafeiner Bläschen so konfiguriert ist, dass die aus dem Strömungskanal ausströmende Flüssigkeit in einem Sammelbehälter (24) an einer Position gesammelt werden kann, die in der Schwerkraftrichtung niedriger als der Kopf zur Erzeugung ultrafeiner Bläschen liegt.

3. Vorrichtung zur Erzeugung ultrafeiner Bläschen nach Anspruch 1 oder 2, wobei
sich der Strömungskanal in der Schwerkraftrichtung erstreckt.

4. Vorrichtung zur Erzeugung ultrafeiner Bläschen nach einem der Ansprüche 1 bis 3, wobei
der Strömungskanal in einer Richtung, in der die Flüssigkeit strömt, schmaler wird.

5. Vorrichtung zur Erzeugung ultrafeiner Bläschen nach einem der Ansprüche 1 bis 4, wobei
der Strömungskanal mit mindestens einem Elementsubstrat versehen ist, auf dem mehrere Heizelemente angeordnet sind, die bei Anlegen einer Spannung Filmsieden veranlassen.

6. Vorrichtung zur Erzeugung ultrafeiner Bläschen nach Anspruch 5, ferner umfassend eine Steuereinheit (23), die dazu ausgelegt ist, die mehreren Heizelemente in einer Richtung, in der die Flüssigkeit strömt, nacheinander anzusteuern.

7. Vorrichtung zur Erzeugung ultrafeiner Bläschen nach Anspruch 5 oder 6, wobei
der Kopf zur Erzeugung ultrafeiner Bläschen enthält: den Strömungskanal, das Elementsubstrat, ein Einströmrohr, durch das die von der Flüssigkeitsbehältereinheit zugeführte Flüssigkeit in den Strömungskanal strömt, und ein Ausströmrohr, durch das die im Strömungskanal befindliche Flüssigkeit ausströmt.

8. Vorrichtung zur Erzeugung ultrafeiner Bläschen nach Anspruch 5 oder 6, wobei
der Kopf zur Erzeugung ultrafeiner Bläschen durch Module gebildet ist, die mindestens in Reihe oder parallel in Fluidverbindung stehen, wobei die Module jeweils enthalten: den Strömungskanal, das mindestens eine Elementsubstrat, ein Einströmrohr, durch das die von der Flüssigkeitsbehältereinheit zugeführte Flüssigkeit in den Strömungskanal strömt, und ein Ausströmrohr, durch das die im Strömungskanal befindliche Flüssigkeit ausströmt.

9. Vorrichtung zur Erzeugung ultrafeiner Bläschen nach einem der Ansprüche 1 bis 8, wobei
die in der Flüssigkeitsbehältereinheit enthaltene Flüssigkeit eine Flüssigkeit ist, in der ein vorbestimmtes Gas gelöst ist, und
die durch den Kopf zur Erzeugung ultrafeiner Bläschen erzeugten ultrafeinen Bläschen das vorbestimmte Gas enthalten.

10. Vorrichtung zur Erzeugung ultrafeiner Bläschen nach einem der Ansprüche 1 bis 9, wobei
die Flüssigkeitsbehältereinheit eine austauschbare Kartusche ist.

11. Vorrichtung zur Erzeugung ultrafeiner Bläschen nach Anspruch 10, wobei
die Kartusche enthält: einen starren Außenbehälter, der mit einer Atmosphärenkommunikationsöffnung versehen ist, und einen verformbaren Innenbehälter, der die Flüssigkeit enthält.

12. Vorrichtung zur Erzeugung ultrafeiner Bläschen nach Anspruch 10, wobei
die Kartusche enthält: einen Behälter, der die Flüssigkeit enthält, und ein Ventil, das sich bei Abnehmen eines Innendrucks im Behälter öffnet.

13. Vorrichtung zur Erzeugung ultrafeiner Bläschen nach einem der Ansprüche 1 bis 2, wobei
der Druck des hydraulischen Höhenunterschieds 1 kpa oder weniger beträgt.

14. Vorrichtung zur Erzeugung ultrafeiner Bläschen nach einem der Ansprüche 1 bis 13, wobei
der Strömungskanal einen Innendurchmesser von 2 mm oder mehr und eine Länge von 10 mm oder mehr aufweist.

15. Vorrichtung zur Erzeugung ultrafeiner Bläschen nach einem der Ansprüche 1 bis 14, wobei der Strömungskanal so angeordnet ist, dass eine Strömungsrate der Flüssigkeit durch den Strömungskanal 2000 g/Minute oder weniger beträgt.

16. Vorrichtung zur Erzeugung ultrafeiner Bläschen nach Anspruch 1 oder 2, wobei der Strömungskanal so angeordnet ist, dass die Flüssigkeit in der Schwerkraftrichtung durch den Strömungskanal strömt.

17. Vorrichtung zur Erzeugung ultrafeiner Bläschen nach Anspruch 1 oder 2, wobei der Strömungskanal so angeordnet ist, dass die Flüssigkeit in einer der Schwerkraftrichtung entgegengesetzten Richtung durch den Strömungskanal strömt.

18. Verfahren zur Erzeugung ultrafeiner Bläschen, umfassend, in einem Zustand, in dem eine Flüssigkeitsbehältereinheit (21) an einer in Schwerkraftrichtung höheren Position in Fluidverbindung mit einem Kopf (20) zur Erzeugung ultrafeiner Bläschen steht, der einen Strömungskanal (600) und ein Heizelement (10) enthält,
Strömen der Flüssigkeit von der Flüssigkeitsbehältereinheit (21) durch den Strömungskanal (600), wobei ein hydraulischer Höhenunterschied zwischen dem Kopf (20) zur Erzeugung ultrafeiner Bläschen und der Flüssigkeitsbehältereinheit (21) bewirkt, dass die Flüssigkeit durch den Strömungskanal (600) strömt; und
Veranlassen eines Filmsiedens der im Strömungskanal (600) strömenden Flüssigkeit durch Heizen des Heizelements (10).

## Revendications

1. Appareil de génération de bulles ultrafines (2) comprenant :
une tête de génération de bulles ultrafines (20) capable de générer des bulles ultrafines en provoquant une ébullition pelliculaire dans un liquide présent dans un canal d'écoulement (600) ; et
une unité contenant du liquide (21) reliée fluidiquement à la tête de génération de bulles ultrafines (20) à une position plus haute que la tête de génération de bulles ultrafines (20) dans une direction de la force gravitationnelle et capable de délivrer le liquide à la tête de génération de bulles ultrafines (20),
**caractérisé en ce que**
l'unité contenant du liquide (21) et la tête de génération de bulles ultrafines sont disposées de telle sorte qu'une différence de charge hydraulique entre la tête de génération de bulles ultrafines (20) et l'unité contenant du liquide (21) provoque l'écoulement du liquide à travers le canal d'écoulement (600) dans la tête de génération de bulles ultrafines (20).

2. Appareil de génération de bulles ultrafines selon la revendication 1, l'appareil de génération de bulles ultrafines étant configuré de telle sorte que le liquide s'écoulant hors du canal d'écoulement puisse être collecté dans un récipient de collecte (24) à une position plus basse que la tête de génération de bulles ultrafines dans la direction de la force gravitationnelle.

3. Appareil de génération de bulles ultrafines selon la revendication 1 ou 2, dans lequel
le canal d'écoulement s'étend dans la direction de la force gravitationnelle.

4. Appareil de génération de bulles ultrafines selon l'une quelconque des revendications 1 à 3, dans lequel
le canal d'écoulement devient plus étroit dans une direction dans laquelle le liquide s'écoule.

5. Appareil de génération de bulles ultrafines selon l'une quelconque des revendications 1 à 4, dans lequel,
le canal d'écoulement est pourvu d'au moins un substrat d'éléments sur lequel sont disposés une pluralité d'éléments chauffants qui provoquent une ébullition pelliculaire lors de l'application d'une tension.

6. Appareil de génération de bulles ultrafines selon la revendication 5, comprenant en outre une unité de commande (23) configurée pour attaquer séquentiellement la pluralité d'éléments chauffants dans une direction dans laquelle le liquide s'écoule.

7. Appareil de génération de bulles ultrafines selon la revendication 5 ou 6, dans lequel
la tête de génération de bulles ultrafines comprend le canal d'écoulement, le substrat d'éléments, un conduit d'entrée par lequel le liquide fourni par l'unité contenant du liquide s'écoule dans le canal d'écoulement, et un conduit de sortie par lequel le liquide présent dans le canal d'écoulement s'écoule en sortie.

8. Appareil de génération de bulles ultrafines selon la revendication 5 ou 6, dans lequel
la tête de génération de bulles ultrafines est constituée de modules qui sont reliés fluidiquement au moins en série ou en parallèle, les modules comprenant chacun le canal d'écoulement, l'au moins un substrat d'éléments, un conduit d'entrée par lequel le liquide délivré par l'unité contenant du liquide s'écoule dans le canal d'écoulement, et un conduit de sortie par lequel le liquide présent dans le canal d'écoulement s'écoule en sortie.

9. Appareil de génération de bulles ultrafines selon l'une quelconque des revendications 1 à 8, dans lequel
le liquide contenu dans l'unité contenant du liquide est un liquide dans lequel un gaz prédéterminé est dissous, et
les bulles ultrafines générées par la tête de génération de bulles ultrafines contiennent le gaz prédéterminé.

10. Appareil de génération de bulles ultrafines selon l'une quelconque des revendications 1 à 9, dans lequel
l'unité contenant du liquide est une cartouche remplaçable.

11. Appareil de génération de bulles ultrafines selon la revendication 10, dans lequel
la cartouche comprend un récipient extérieur rigide pourvu d'un orifice de communication avec l'atmosphère et un récipient intérieur déformable qui contient le liquide.

12. Appareil de génération de bulles ultrafines selon la revendication 10, dans lequel
la cartouche comprend un récipient qui contient le liquide et une soupape qui s'ouvre en cas de diminution de la pression interne dans le récipient.

13. Appareil de génération de bulles ultrafines selon l'une quelconque des revendications 1 à 2, dans lequel
la pression de la différence de charge hydraulique est inférieure ou égale à 1 kPa.

14. Appareil de génération de bulles ultrafines selon l'une quelconque des revendications 1 à 13, dans lequel
le canal d'écoulement a un diamètre intérieur supérieur ou égal à 2 mm et une longueur supérieure ou égale à 10 mm.

15. Appareil de génération de bulles ultrafines selon l'une quelconque des revendications 1 à 14, dans lequel le canal d'écoulement est conçu de telle sorte qu'un débit du liquide dans le canal d'écoulement est inférieur ou égal à 2000 g/minute.

16. Appareil de génération de bulles ultrafines selon la revendication 1 ou 2, dans lequel le canal d'écoulement est conçu de telle sorte que le liquide s'écoule à travers le canal d'écoulement dans la direction de la force gravitationnelle.

17. Appareil de génération de bulles ultrafines selon la revendication 1 ou 2, dans lequel le canal d'écoulement est conçu de telle sorte que le liquide s'écoule à travers le canal d'écoulement dans une direction opposée à la direction de la force gravitationnelle.

18. Procédé de génération de bulles ultrafines comprenant les étapes consistant en, dans un état dans lequel une unité contenant du liquide (21) est reliée à une position fluidiquement plus haute dans la direction de la force gravitationnelle qu'une tête de génération de bulles ultrafines (20) qui comprend un canal d'écoulement (600) et un élément chauffant (10),
l'écoulement du liquide provenant de l'unité contenant du liquide (21) à travers le canal d'écoulement (600), où une différence de charge hydraulique entre la tête de génération de bulles ultrafines (20) et l'unité contenant du liquide (21) provoque l'écoulement du liquide à travers le canal d'écoulement (600) ; et
le fait de provoquer une ébullition pelliculaire dans le liquide s'écoulant dans le canal d'écoulement (600) par chauffage de l'élément chauffant (10).
